(19) Europäisches Patentamt
European Patent Office
Office européen des brevets

(11) **EP 2 247 018 A1**

(12) **EUROPEAN PATENT APPLICATION**
published in accordance with Art. 153(4) EPC

(43) Date of publication:
**03.11.2010 Bulletin 2010/44**

(51) Int Cl.:
*H04L 1/16* (2006.01)          *H04B 1/707* (2006.01)
*H04J 11/00* (2006.01)          *H04J 99/00* (2009.01)

(21) Application number: **09713295.5**

(22) Date of filing: **20.02.2009**

(86) International application number:
**PCT/JP2009/053088**

(87) International publication number:
**WO 2009/104764 (27.08.2009 Gazette 2009/35)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **21.02.2008 JP 2008040009**

(71) Applicant: **Sharp Kabushiki Kaisha
Osaka-shi
Osaka 545-8522 (JP)**

(72) Inventors:
• **YOSHIMOTO, Takashi
Osaka 545-8522 (JP)**
• **YAMADA, Ryota
Osaka 545-8522 (JP)**
• **SHIMEZAWA, Kazuyuki
Osaka 545-8522 (JP)**
• **NOGAMI, Toshizo
Osaka 545-8522 (JP)**

(74) Representative: **Müller - Hoffmann & Partner
Patentanwälte
Innere Wiener Strasse 17
81667 München (DE)**

(54) **COMMUNICATION DEVICE, COMMUNICATION SYSTEM, RECEPTION METHOD, AND PROGRAM**

(57)     A communication device including: a reception unit which receives signals including an initial transmission signal and signals including retransmission signals for the same data; a signal detection unit which detects at least two signals among the initial transmission signal and the plurality of retransmission signals for the same data from the received signal using the result of a decoding process; a combining unit which combines at least two signals detected by the signal detection unit; and a decoding unit which obtains the result of the decoding process by decoding the combined signal; wherein the detection by the signal detection unit, the combining by the combining unit, and the decoding by the decoding unit are iteratively performed with respect to the plurality of signals for the same data.

FIG. 1

EP 2 247 018 A1

**Description**

TECHNICAL FIELD

The present invention relates to a communication device, a communication system, a reception method, and a program, and more particularly to a communication device, a communication system, a reception method, and a program which use a hybrid automatic repeat request.
Priority is claimed on Japanese Patent Application No. 2008-040009, filed on February 21, 2008, the contents of which are incorporated herein by reference.

BACKGROUND ART

Communication systems are subject to diverse forms of interference due to the transmission system of their transmission/reception signals and the environment of their propagation channel.
For example, in a wireless communication system, a transmission scheme using an OFDM (Orthogonal Frequency Division Multiplex) can reduce the influence of multi-path fading in a high-speed digital signal transmission through inclusion of a multi-carrier and insertion of a GI (Guard Interval). However, if a delay wave that exceeds the guard interval period exists in the transmission of a multi-carrier, there can be an ISI (Inter-Symbol Interference) that occurs due to a previous symbol entering into a Fast Fourier Transform period or an ICI (Inter-Carrier Interference) that occurs due to a disconnection of symbols in the Fast Fourier Transform period, i.e. due to a signal entering into a discontinuous period.

One technique for improving characteristic deterioration caused by the ISI (Inter-Symbol Interference) or ICI (Inter-Carrier Interference) has been proposed in Patent Document 1 below. In this related art, a reception device, after performing a demodulation operation once, prepares a replica (interference replica) signal of a sub-carrier except for the desired one that includes an ISI (Inter-Symbol Interference) component and an ICI (Inter-Carrier Interference) component, using the result of error correction (output of a MAP (Maximum A posteriori Probability) decoder), and then repeating a process of performing the demodulation operation again with respect to a signal that is obtained by removing the replica signal from the received signal to improve the characteristic deterioration caused by the ISI (Inter-Symbol Interference) and the ICI (Inter-Carrier Interference).

Also, as a combined scheme in which the above-described multi-carrier transmission scheme and a CDM (Code Division Multiplexing) scheme are combined, there is an MC-CDM (Multi Carrier-Code Division Multiplexing) scheme that spreads a signal using a spreading code in a multi-carrier. A frequency diversity effect is obtained by arranging data that is obtained by encoding and multiplying the spreading code over a plurality of sub-carriers, and thus excellent characteristics can be obtained under a multi-path fading environment. On the other hand, in the case of code multiplexing, an MCI (Multi-Code Interference) due to the collapsing of orthogonality between spreading codes may occur.

Techniques for improving the characteristic deterioration caused by the MCI (Multi-Code Interference) are disclosed in Patent Document 2, Non-Patent Document 1, and Non-Patent Document 2. According to these techniques in the related art, even though there is a difference between a down link and an upper link, in order to remove the MCI (Multi-Code Interference) caused by the code multiplexing in MC-CDMA (Multi Carrier-Code Division Multiple Access) communications, a replica (interference replica) signal of an undesired code that includes the MCI (Multi-Code Interference) component is prepared using data after error correction or de-spreading, and a process of performing demodulation and decoding operations again with respect to a signal obtained by removing the replica signal from the received signal are iteratively performed to seek improvement in its characteristics.

As described above, the transmission characteristic can be greatly improved by removing the replica signal of each interference component from the received signal against the characteristic deterioration due to diverse interferences (the ISI (Inter-Symbol Interference), the ICI (Inter-Carrier Interference), and the MCI (Multi-Code Interference)) and by applying an iteration processing technique (turbo equalization and canceller) for performing the demodulation and decoding again. However, if the above-described ISI (Inter-Symbol Interference), ICI (Inter-Carrier Interference), and MCI (Multi-Code Interference) occur greatly, the data error may not be sufficiently and completely corrected even if the processing technique is iteratively applied (i.e. a desired error rate may not be obtained).

As an error control technique that solves these problems, there is a HARQ (Hybrid Automatic Repeat reQuest) scheme in which an ARQ described in Non-Patent Document 3 and Non-Patent Document 4 and error correction coding such as turbo coding are combined. In the HARQ (Hybrid-ARQ), a receiver refers to a technique which requests a repeat from a transmitter if an error is detected in a received signal and performs a decoding process with respect to a combined signal of a signal received again and a signal already received. In particular, as HARQ, a CC (Chase Combining) and an IR (Incremental Redundancy) have been well known. For example, in the HARQ (Hybrid-ARQ) using the CC (Chase Combining), a repeat of an entirely the same packet is requested if an error has been detected from a received packet. By combining these two received packets, the quality of reception can be increased. Also, in the HARQ (Hybrid-ARQ) using an IR (Incremental Redundancy), since the redundancy bit is divided and sequentially repeated by degrees, a coding rate can be lowered and an error correction capability can be strengthened with the increase of the number of repeats.

Patent Document 1: Japanese Unexamined Patent Publication, First Publication No. 2004-221702
Patent Document 2: Japanese Unexamined Patent Publication, First Publication No. 2005-198223
Non-Patent Document 1: Y. Zhou, J. Wang, M. Sawahashi, "Downlink Transmission of Broadband OFCDM Systems-Part III: Turbo-Coded," IEEE JSAC Vol. 24, No. 1, pp 132-140
Non-Patent Document 2: T. Yoshimoto, R. Yamada, K, Shimezawa, "Performance of MC-CDM Systems with Inter-Code Interference Canceller and Frequency-Domain Interleaver," in Proc. IEEE VTC 2007-Spring
Non-Patent Document 3: D. Chase, "code combining-A maximum likelihood decoding approach for combining and arbitrary number of noisy packets," IEEE Trans. Commun., vol. COM-33, pp. 385-393, May 1985
Non-Patent Document 4: J. Hagenauer, "Rate-compatible punctured convolutional codes (RCPC codes) and their application," IEEE Trans. Commun., vol. 36, pp. 389-400, April 1988.

## DISCLOSURE OF INVENTION

### Problem to be Solved by the Invention

In the HARQ (Hybrid-ARQ) in the related art, however, if great interference occurs, data errors cannot be sufficiently corrected to degrade the quality of transmission, and thus the number of iteration processes and the number of repeats may become larger.

The present invention has been made in view of the above-described problems, and an object of the invention is to provide a communication device, a communication system, a reception method, and a program which can reduce the number of iteration processes and the number of repeats in a communication system using a HARQ (Hybrid ARQ (Automatic Repeat request)).

### Means for Solving the Problem

The present invention has been made to solve the above-described problems. According to an aspect of the present invention, there is provided a communication device including: a reception unit which receives signals including an initial transmission signal and signals including retransmission signals for the same data; a signal detection unit which detects at least two signals among the initial transmission signal and the plurality of retransmission signals for the same data from the received signal using the result of a decoding process; a combining unit which combines at least two signals detected by the signal detection unit; and a decoding unit which obtains the result of the decoding process by decoding the combined signal; wherein the detection by the signal detection unit, the combining by the combining unit, and the decoding by the decoding unit are iteratively performed with respect to the plurality of signals for the same data.

Accordingly, the communication device performs a decoding process with respect to a signal in which at least two signals are combined, among an initial transmission signal and a plurality of retransmission signals, and thus accuracy in the result of a decoding process is increased. Thus, even if great interference has occurred, the interference can be removed with good accuracy, and the number of iteration processes and the number of repeats can be reduced.

In the communication device according to the aspect of the present invention, the at least two signals detected by the signal detection unit include the initial transmission signal.

Accordingly, the communication device includes an initial transmission signal that at least includes lowermost information that is necessary to obtain the result of decoding in a signal to be combined, and thus accuracy in the result of a decoding process is increased. Thus, even if great interference has occurred, the interference can be removed with good accuracy, and the number of iteration processes and the number of repeats can be reduced.

In the communication device according to the aspect of the present invention, the signal detection unit detects all the initial transmission signal and the retransmission signals for the same data received by a reception unit; and the combining unit combines all the signals for the same data detected by the signal detection unit.

In the communication device according to the aspect of the present invention, the signal detection unit generates an interference replica of the initial transmission signal and interference replicas of the retransmission signals based on the result of the decoding process, and subtracts the interference replicas from the signal received by the reception unit.

In the communication device according to the aspect of the present invention, the decoding processing unit outputs the result of a soft-decision decoding process; and the signal detection unit generates the interference replica using the result of the soft-decision decoding process.

In the communication device according to the aspect of the present invention, the interference replica is an interference replica of one interference component of inter-symbol interference , inter-carrier interference, inter-code interference, and inter-stream interference with respect to the initial transmission signal or the retransmission signals.

In the communication device according to the aspect of the present invention, the signal detection unit outputs the result of soft-decision by demodulating a signal obtained by subtracting the interference replica from the signal received by the reception unit; and the combining unit combines the result of soft-decision.

In the communication device according to the aspect of the present invention, the signal received by the reception unit is a spatial multiplexing signal; and the signal detection unit includes a MIMO separation unit which performs a separation process of a stream which constitutes the signal received by the reception unit.

According to another aspect of the present invention, there is provided a communication system including a first communication device and a second communication device, the first communication device transmitting an initial transmission signal for data, and if a repeat request signal is received from a communication device of the other party as a response to the initial transmission signal, transmitting a retransmission signal for the data, and the second communication device receiving the signal transmitted from the first communication device, and if an error is detected from the result of decoding the signal, requesting the repeat from the first communication device, wherein the second communication device including: a reception unit which receives signals including the initial transmission signal and signals including the retransmission signals for the same data; a signal detection unit which detects at least two signals among the initial transmission signal and the plurality of retransmission signals for the same data from the received signal using the result of a decoding process; a combining unit which combines at least two signals detected by the signal detection unit; and a decoding unit which obtains the result of the decoding process by decoding the combined signal; wherein the detection by the signal detection unit, the combining by the combining unit, and the decoding by the decoding unit are iteratively performed with respect to the plurality of signals for the same data.

According to still another aspect of the present invention, there is provided a reception method in a communication device, the reception method including: receiving, by the communication device, signals including an initial transmission signal and signals including retransmission signals for the same data; detecting, by the communication device, at least two signals among the initial transmission signal and the plurality of retransmission signals for the same data from the received signal using the result of a decoding process; combining, by the communication device, at least two signals detected in the detecting; and obtaining, by the communication device, the result of the decoding process by decoding the signal combined in the combining; wherein the detection, the combining, and the obtaining are iteratively performed with respect to the plurality of signals for the same data.

According to still another aspect of the present invention, there is provided a program causing a computer provided in a communication device to execute function as: a reception unit which receives signals including an initial transmission signal and signals including retransmission signals for the same data; a signal detection unit which detects at least two signals among the initial transmission signal and the plurality of retransmission signals for the same data from the received signal using the result of a decoding process; a combining unit which combines at least two signals detected by the signal detection unit; and a decoding unit which obtains the result of the decoding process by decoding the combined signal; wherein the detection by the signal detection unit, the combining by the combining unit, and the decoding by the decoding unit are iteratively performed with respect to the plurality of signals for the same data.

Effect of the Invention

According to the present invention, since signal detection, combination, and decoding processes are iteratively performed with respect to a plurality of signals for the same data, an accuracy in the result of a decoding process can be improved, and the number of iteration processes of the signal detection, combination and decoding and the number of repeats in the HARQ (Hybrid-ARQ) can be reduced.

BRIEF DESCRIPTION OF THE DRAWINGS

FIG. 1 is a schematic block diagram illustrating the configuration of a packet transmission device 100 according to a first embodiment of the present invention.

FIG. 2 is a schematic block diagram illustrating the configuration of an encoding unit 121 in the same embodiment.

FIG. 3 is a diagram illustrating the internal configuration of an error correction coding unit 126 in the same embodiment.

FIG. 4 is a diagram illustrating an example of a frame structure in the same embodiment.

FIG. 5 is a diagram illustrating an example of a predetermined pattern stored by a puncturing unit 127 in the same embodiment.

FIG. 6 is a schematic block diagram illustrating another configuration of the encoding unit 121 that is different from that as in FIG. 2.

FIG. 7 is a schematic block diagram illustrating the configuration of a packet reception device 200 according to the same embodiment.

FIG. 8 is a schematic block diagram illustrating the configuration of a decoding unit 205 according to the same embodiment.

FIG. 9 is a schematic block diagram illustrating the configuration of an interference removing unit 212 according to the same embodiment.

FIG. 10 is a schematic block diagram illustrating the configuration of a replica generation unit 251 that generates an interference replica of an ISI (Inter-Symbol Interference) according to the same embodiment.

FIG. 11 is a flowchart illustrating an operation of a packet reception device 200 according to the same embodiment.

FIG. 12 is a flowchart illustrating operations of a signal detection unit 207-p for each received signals and respective related units in step S12 of FIG. 11 according to the same embodiment.

FIG. 13 is a sequence diagram illustrating an operation example of a communication system to which a HARQ scheme having a packet transmission device 100 and a packet reception device 200 is applied according to the same embodiment.

FIG. 14 is a sequence diagram illustrating an example of an operation in the case where an initially transmission packet and retransmission packets coexist in a frame according to the same embodiment.

FIG. 15 is a schematic block diagram illustrating the configuration of a packet reception device 200a according to a second embodiment of the present invention.

FIG. 16 is a schematic block diagram illustrating the configuration of an interference removing unit 212a according to the same embodiment.

FIG. 17 is a schematic block diagram illustrating the configuration of a packet transmission device 500 according to a third embodiment of the present invention.

FIG. 18 is a schematic block diagram illustrating the configuration of a packet reception device 600 according to the same embodiment.

FIG. 19 is a schematic block diagram illustrating the configuration that performs stream separation of MIMO using a repetitive SIC as a received signal processing unit 604 according to the same embodiment.

Reference Symbols

| 100: | PACKET TRANSMISSION DEVICE |
|---|---|
| 101: | ANTENNA UNIT |
| 102: | TRANSMISSION UNIT |
| 103: | TRANSMISSION SIGNAL GENERATION UNIT |
| 105: | RESTORATION UNIT |
| 106-1 to 106-N: | SIGNAL GENERATION UNIT FOR EACH CODE CHANNELS |
| 107: | CODE MULTIPLEXING UNIT |
| 108: | IFFT UNIT |
| 109: | MULTIPLEXING UNIT |
| 110: | GI INSERTION UNIT |
| 111: | RETRANSMISSION CONTROL SIGNAL GENERATION UNIT |
| 112: | PILOT SIGNAL GENERATION UNIT |
| 121: | ENCODING UNIT 122: INTERLEAVING UNIT |
| 123: | MODULATION UNIT |
| 124: | SPREADING UNIT |

| 125: | ERROR DETECTION CODING UNIT |
| 126: | ERROR CORRECTION CODING UNIT |
| 127: | PUNCTURING UNIT |
| 128: | TRANSMISSION DATA STORAGE UNIT |
| 136: | ERROR CORRECTION CODING UNIT |
| 137: | PUNCTURING UNIT |
| 138: | TRANSMISSION DATA STORAGE UNIT |
| 200, 200a: | PACKET RECEPTION DEVICE |
| 201: | ANTENNA UNIT |
| 202: | RECEPTION UNIT |
| 203, 203a: | SIGNAL DETECTION UNIT |
| 204, 204a: | COMBINING UNIT |
| 205, 205a: | DECODING UNIT |
| 206, 206a: | RECEIVED PACKET MANAGEMENT UNIT |
| 207-1 to 207-P, 207a-1 to 207a-P: | SIGNAL DETECTION UNIT FOR EACH RECEIVED SIGNALS |
| 210, 210a: | PROPAGATION CHANNEL ESTIMATION UNIT |
| 211, 211a: | RECEIVED SIGNAL STORAGE UNIT |
| 212, 212a: | INTERFERENCE REMOVING UNIT |
| 213, 213a: | GI REMOVING UNIT |
| 214: | FFT UNIT |
| 215, 215a: | PROPAGATION CHANNEL COMPENSATION UNIT |
| 216, 216a: | DE-SPREADING UNIT |
| 217: | DEMODULATION UNIT |
| 218: | DE-INTERLEAVING UNIT |
| 219: | DE-PUNCTURING UNIT |
| 220: | RESPONSE SIGNAL GENERATION UNIT |
| 230: | RECEIVED SIGNAL PROCESSING UNIT |
| 241: | ERROR CORRECTION DECODING UNIT |
| 242: | ERROR DETECTION UNIT |

| | |
|---|---|
| 251, 251a: | REPLICA GENERATION UNIT |
| 252, 252a: | SUBTRACTION UNIT |
| 253, 253a: | CODE MULTIPLEXING UNIT |
| 254: | IFFT UNIT |
| 255: | GI INSERTION UNIT |
| 256, 256a: | INTERFERENCE REPLICA GENERATION UNIT |
| 257-1 to 257-N: | CODE |
| 261: | PUNCTURING UNIT |
| 262: | INTERLEAVING UNIT |
| 263: | SYMBOL REPLICA UNIT |
| 264: | SPREADING UNIT |
| 500: | PACKET TRANSMISSION DEVICE |
| 501-1 to 501-N: | STREAM SIGNAL GENERATION UNIT |
| 502-1 to 502-N: | ANTENNA UNIT |
| 503: | RETRANSMISSION CONTROL SIGNAL GENERATION UNIT |
| 504: | RESTORATION UNIT |
| 511: | ENCODING UNIT |
| 512: | INTERLEAVING UNIT |
| 513: | MODULATION UNIT |
| 514: | IFFT UNIT |
| 515: | MULTIPLEXING UNIT |
| 516: | GI INSERTION UNIT |
| 517: | TRANSMISSION UNIT |
| 600: | PACKET RECEPTION DEVICE |
| 601-1 to 601-M: | ANTENNA UNIT |
| 602-1 to 602-M: | SIGNAL PROCESSING UNIT FOR EACH ANTENNAS |
| 603: | RECEIVED PACKET MANAGEMENT UNIT |
| 604: | RECEIVED SIGNAL PROCESSING UNIT |
| 605: | RESPONSE SIGNAL GENERATION UNIT |

| | |
|---|---|
| 610: | RECEPTION UNIT |
| 611: | GI REMOVING UNIT |
| 612: | FFT UNIT |
| 613: | PROPAGATION CHANNEL ESTIMATION UNIT |
| 1601-1 to 1601-N: | SIGNAL DETECTION UNIT FOR EACH RECEIVED SIGNALS |
| 1602: | RECEIVED REPLICA GENERATION UNIT |
| 1603: | SUBTRACTION UNIT |
| 1604-1-1 to 1604-N-P: | SYMBOL REPLICA GENERATION UNIT |
| 1605: | MIMO SEPARATION UNIT |
| 1606: | DEMODULATION UNIT |
| 1607: | DE-INTERLEAVING UNIT |
| 1608: | DE-PUNCTURING UNIT |
| 1609-1 to 1609-N: | COMBINING UNIT |
| 1610-1 to 1610-N: | DECODING UNIT |
| 1611: | INTERFERENCE REMOVING UNIT |
| 1612: | RECEIVED SIGNAL STORAGE UNIT |

BEST MODE FOR CARRYING OUT THE INVENTION

(First Embodiment)

In the first embodiment of the present invention, if a packet is received by a reception device including an interference canceller which uses an iteration process in a communication system that performs a packet communication adopting an HARQ (Hybrid ARQ (Automatic Repeat reQuest)) scheme, a communication device is provided with an interference canceller that performs an interference cancelling process with respect to an initially transmission and/or retransmission packet signals which are received before a retransmission packet when the retransmission packet signal of this data is received. A communication system according to the first embodiment includes a packet transmission device (first communication device) 100 and a packet reception device (second communication device) 200 which are the communication devices, and an MC-CDM (Multi Carrier-Code Division Multiplexing) scheme is adopted as a packet transmission scheme from the packet transmission device 100 that adopts a HARQ (Hybrid Automatic Repeat request) to the packet reception device 200. Also, in embodiments after this embodiment, the case where the MC-CDM is adopted will be described.

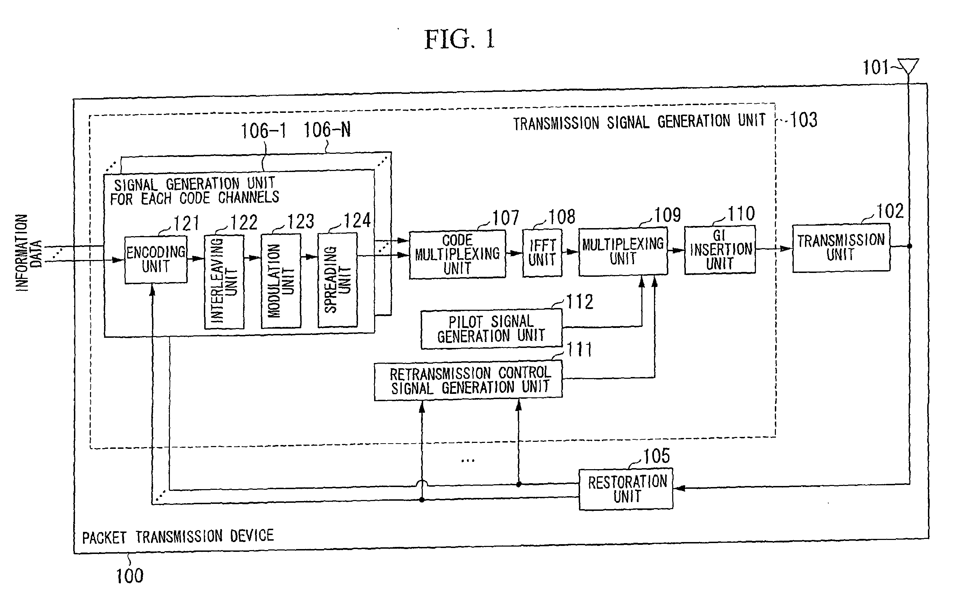

FIG. 1 is a schematic block diagram illustrating the configuration of a packet transmission device 100 according to a first embodiment of the present invention. For example, the packet transmission device 100 is provided in a base station device in a downlink and in a mobile station device in an uplink by a wireless communication system. Also, the packet transmission device 100 is provided in a repeater station device in a downlink between the repeater station device and the mobile station device. The packet transmission device 100 is provided with a transmission unit 102, a transmission signal generation unit 103, and a restoration unit 105.

An antenna unit 101 receives a signal that includes a response signal transmitted from the packet reception device 200, or transmits a signal generated by the packet transmission device 100. The transmission unit 102 digital-analog converts an output signal of the transmission signal generation unit 103 into an analog signal, performs a filtering process that performs a band restriction, further performs a conversion into a transmittable frequency band, and then transmits the converted signal through the antenna 101.

The restoration unit 105 converts the signal received from the packet reception device 200 through the antenna 101 into a restorable frequency band, performs a filtering process for band restriction, and then performs an analog-digital conversion from an analog signal into a digital signal. Further, the restoration unit 105 further performs a received signal restoring process such as data demodulation, error correction decoding, and the like, of the digital signal, and extracts a response signal included in the signal from the packet reception device 200. At this time, the restoration unit 105 has a received signal restoring process function based on the transmission scheme of the received signal. The response signal is a signal for confirming the transmission and including information on whether a repeat of the signal is requested, and for example, may be ACK (ACKnowledgement)/NACK (Negative ACKnowledgement) signals. If a reception side cannot correctly receive the packet transmitted from a transmission side, the reception side returns the NACK signal to the transmission side, while if the reception side can correctly receive the packet, the reception side returns a selective ACK signal, which is a return signal from the reception side to the transmission side with respect to the correctly received signal, to the transmission side. At this time, the packet transmission device 100, if a response signal is not received within a predetermined period of time after the packet transmission, determines that the packet reception device 200 cannot correctly receive the packet, and repeats the packet transmission.

The transmission signal generation unit 103 includes signal processing units 106-1 to 106-N for each code channels, a code multiplexing unit 107, an IFFT (Inversed Fast Fourier Transformation) unit 108, a multiplexing unit 109, a GI (Guard Interval) insertion unit 110, a retransmission control signal generation unit 111, and a pilot signal generation unit 112. The signal generation units 106-1 to 106-N for each code channels receive information data of respective code channels, which are code-multiplexed and transmitted, and generate respective code channel signals. N denotes a code multiplexed number. Each of the signal generation units 106-1 to 106-N includes an encoding unit 121, an interleaving unit 122, a modulation unit 123, and spreading unit 124.

The encoding unit 121 adds a redundancy bit to the information data so that the packet reception device 200 that has received the information data can perform an error detection and error correction. Also, the encoding unit 121 outputs information data added with the redundancy bit as for an initially transmission packet when it receives a notification to the effect that it has received the ACK signal from the restoration unit 105, or information data, while it outputs information data added with the redundancy bit as for a retransmission packet when it receives a notification to the effect that it has received the NACK signal from the restoration unit 105. In this case, details of the encoding unit 121 will be described later. The interleaving unit 122 aligns the arrangement of output data series of the encoding unit 121.

The modulation unit 123 performs data modulation such as a QPSK (Quadrature Phase Shift Keying), 16QAM (16 Quadrature Amplitude Modulation), and the like, with respect to output data from the interleaving unit 122 to generate a modulation symbol. At this time, the data modulation schemes for the initially transmission packet and the retransmission packet may differ from each other. For example, the initially transmission packet may be modulated by 16QAM, and the retransmission packet may be modulated by QPSK. The spreading unit 124 multiplies the modulation symbol by the spreading code series that corresponds to the signal generation unit 106-1 to 106-N for each code channels. As the spreading code series, there may be an orthogonal code such as Walsh-Hadamard code and so on.

The code multiplexing unit 107 performs code multiplexing with respect to an output signal of the spreading unit of the signal generation unit 106-1 to 106-N for each code channels. The IFFT unit 108 performs a frequency-time transform of the output signal from the code multiplexing unit 107 through the IFFT (Inverse Fast Fourier Transform) and so on. At this time, it is sufficient if the transform, which is performed by the IFFT unit 108, is the frequency-time transform such as an IDFT (Inverse Discrete Fourier Transform) even except for the IFFT. The input signal to the IFFT unit 108, if the signal allocated to the k-th sub-carrier is set to S(k), is expressed as in Equation (1).

$$S(k) = \sum_{u=0}^{N_{code}-1} c_{u,k \bmod SF} \, d_u\left(\left\lfloor \frac{k}{SF} \right\rfloor\right),$$

where, $\lfloor \alpha \rfloor$ is the largest integer number that is equal to or smaller than $\alpha$, that is, $k = 0, 1, 2, \ldots, N_{sub}-1$.

$N_{code}$, SF, and $N_{sub}$ denote a code-multiplexed number at the code multiplexing unit 107, a spreading rate of the spreading code multiplied by the spreading unit 124, and the number of sub-carriers, respectively. $C_{u,n}$ denotes a value of the n-th chip of the spreading code which is multiplied by the spreading unit 124 of the signal generation unit 106-u for each code channels that generates a signal of the u-th code channel. $d_{u(m)}$ denotes the m-th output signal (modulation symbol) of the modulation unit 123 of the signal generation unit 106-u for each code channels that generates a signal of the u-th code channel.

The multiplexing unit 109 multiplexes an output signal of the IFFT unit 108, a retransmission control signal output from a retransmission control signal generation unit 111, and a pilot signal output from a pilot signal generation unit 112. This multiplexing method may be a method of ether time division multiplex or frequency division multiplex. The pilot signal generation unit 112 generates the pilot signal that is used to estimate a propagation channel. The retransmission control signal generation unit 111 generates a signal (retransmission control signal) for notifying the packet reception device 200 of the number of repetitions of the signals of the respective code channels. At this time, the retransmission control signal may include a notification of transmission parameters such as data modulation scheme, code-multiplexed number, and the like. The GI insertion unit 110 inserts the GI (Guard Interval) into the output signal of the multiplexing unit 109 and inputs the output signal to the transmission unit 102.

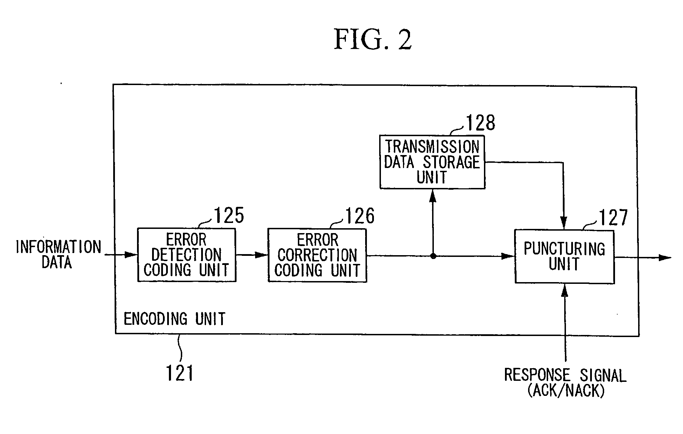

FIG. 2 is a schematic block diagram illustrating the configuration of an encoding unit 121. The encoding unit 121 includes an error detection coding unit 125, an error correction coding unit 126, a puncturing unit 127, and a transmission data storage unit 128. The error detection coding unit 125 performs an error detection coding such as CRC (Cyclic Redundancy Check) with respect to information data so that the packet reception device 200 which has received the information data can detect where an error has occurred, and adds the error detection bit to the information data to be outputted. The error correction coding unit 126 performs an error correction coding such as a turbo code, a convolution code, an LDPC (Low Density Parity Check) code, and the like, with respect to the output data from the error detection coding unit 125.

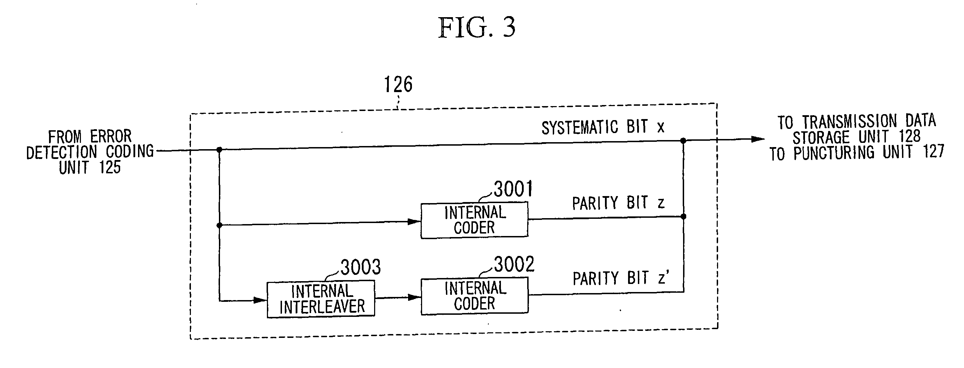

FIG. 3 is a diagram illustrating the internal configuration of an error correction coding unit 126 in the case of applying a turbo code as a coding scheme when the error correction coding unit 126 performs the error correction coding at a coding rate R=1/3. The error correction coding unit 126 includes internal encoders 3001 and 3002 and an internal interleaver 3003. If an error- detection-coded information bit series is input from the error detection coding unit 125, the error correction coding unit 126 output three kinds of information bit series of a systematic bit x, a parity bit z, and a parity bit z'. Here, the systematic bit x is the bit series itself input from the error detection coding unit 125. The parity bit z is a result of an output that is obtained by encoding the bit series from the error detection coding unit 125 through the internal encoder 3001. The parity bit z' is a result of an output that is obtained by first interleaving the bit series from the error detection coding unit 125 through the internal interleaver 3003 and then by encoding the result of interleaving through the internal encoder 3002. Here, the internal encoder 3001 and the internal encoder 3003 may be the same encoders that perform the encoding by the same encoding scheme, or different encoders. Preferably, both of the internal encoder 3001 and the internal encoder 3002 use recursive convolution encoders. Hereinafter, the case where the error correction coding unit 126 with the configuration as illustrated in FIG. 3 uses a turbo code will be described.

In this embodiment, it is assumed that a unit of performing the error detection coding by the error detection coding unit 125 is a packet. Also, in this embodiment, the case where the error correction coding is performed in the unit of a packet and a packet signal is arranged in each code channel for performing the code multiplexing will be described. Also, it is assumed that a signal that is obtained by code-multiplexing the packet signal arranged for each code channel and multiplexing the pilot signal and the retransmission control signal into the code-multiplexed signal is called a frame, and the packet transmission device 100 transmits the signal in the unit of a frame.

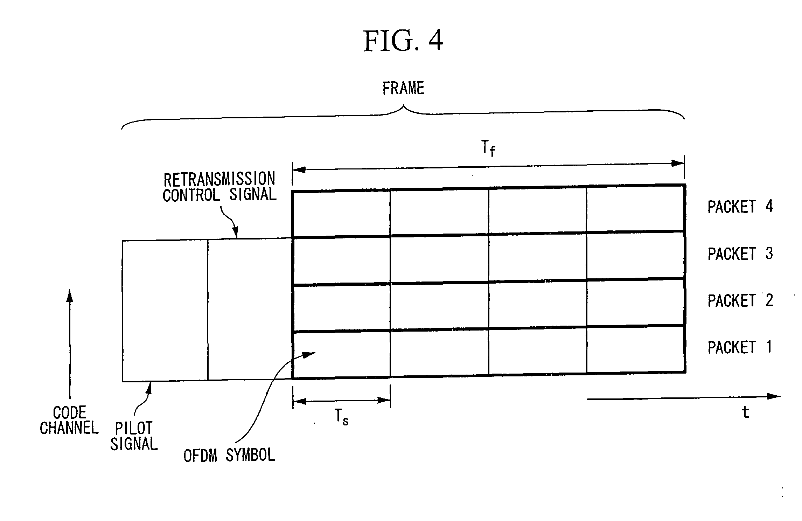

FIG. 4 is a diagram illustrating an example of a frame structure in this embodiment. The frame of FIG. 4 is an example in the case where packet 1 to packet 4 composed of OFDM symbols having four lengths Ts are code-multiplexed, and the pilot signal and the retransmission control signal are time-division multiplexed onto the code-multiplexed. $T_f$ denotes a packet length. An OFDM symbol is composed of a GI period inserted by the GI inserted unit 110 and an effective symbol period that includes output data from the signal generation unit 160-1 to 160-N for each code channels. At this time, it is also possible to perform the error correction coding with respect to a plurality of groups that perform the error detection coding. Also, it is possible to divide the data of which the error detection coding has been made into a plurality of groups and to perform the error correction coding with respect to the data in the unit of a group.

The puncturing unit 127 punctures encoded bits (which are called a puncturing process) that are an output of the error correction coding unit 126 based on a predetermined pattern group stored, and controls the amount of data being transmitted (controls the encoding rate). Also, if the NACK signal is input, the puncturing unit 127 performs a puncturing process with respect to the encoded bits obtained by requesting the same from the transmission data storage unit 128, based on the predetermined pattern group. The predetermined pattern group stored by the puncturing unit 127 will be described later. The transmission data storage unit 128 stores the encoded bits generated by the error correction coding unit 126, and when the puncturing unit 127 makes a request for the encoded bits, the transmission data storage unit 128 outputs the encoded bit corresponding to the stored request. At this time, the NACK signal from the restoring unit 105 is input to the transmission data storage unit 128, and the transmission data storage unit 128, which has received the NACK signal, may output the stored decoded bits to the puncturing unit 127.

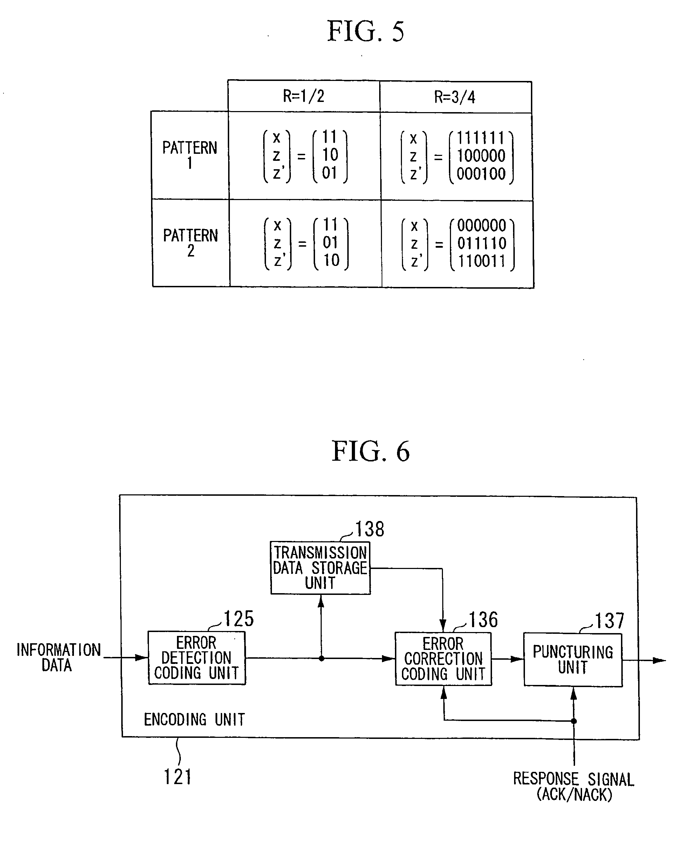

FIG. 5 is a diagram illustrating an example of the predetermined pattern group stored by the puncturing unit 127 as described above. FIG. 5 shows an example of a puncturing pattern that is used for the puncturing process in the case where the error correction encoding unit 126 as shown in FIG. 3 performs the turbo encoding at encoding rate R=1/3 and then the puncturing unit 127 performs the puncturing process at encoding rate R=1/2 or R=3/4. In FIG. 5, x is a bit stream that indicates the puncturing process for the systematic bits composed of the data input from the error detection coding unit 125 to the error correction coding unit 126, that is, the error detection bit and the information data. In this bit stream x, "1" indicates that the bit remains in the corresponding position, and "0" indicates that the bit in the corresponding position is punctured.

z and z' are bit streams that the error correction coding unit 126 indicates the puncturing process of the redundancy bits (the parity bit z and the parity bit z' in FIG. 3) generated from the systematic bit. The respective bit values "1" and "0" of the bit streams z and z' indicate the remaining bit and the punctured bit, respectively, in the same manner as the bit stream x. The puncturing unit 127 performs the puncturing process that is indicated by the bit streams x, z, and z' with respect to the systematic bit and the redundancy bit output from the error correction coding unit 126 and the transmission data storage unit 128, and outputs the bit at the bit position that was indicated by "1" in the puncturing pattern as illustrated in FIG. 5.

At this time, the puncturing pattern group of FIG. 5 is exemplary, and it may be a pattern group (a pattern corresponding to HARQ typeII) where only a portion of the pattern remains the systematic bit or a pattern group (a pattern corresponding to HARQ typeIII) where the entire pattern certainly remains the systematic bit.

As a representative repeat request scheme in the HARQ (Hybrid-ARQ), there are a CC (Chase Combining) scheme and an IR (Incremental Redundancy) scheme. In the case where the CC is applied as the repeat method, the puncturing unit 127 performs puncturing with respect to the data of the initially sent packet signal (data of the initially transmission packet signal) in accordance with the pattern 1 of R=3/4 of FIG. 5, and outputs only the bits indicated as "1" as shown in FIG. 5. The output signal of the puncturing unit 127, which has performed the puncturing process according to pattern 1 is transmitted from the antenna unit 101 by the transmission unit 102 after other processes are performed by the transmission signal generation unit 103. Also, if the NACK signal has been input as a response signal to the initially transmission packet signal (repeat request has been made), the puncturing unit 127 calls the encoded bit of the data transmitted as the initially transmission packet signal from the transmission data storage unit 128, and outputs the signal that has been punctured according to the pattern 1 that is the same as that of the initially transmission packet signal as the retransmission packet signal.

As described above, in the CC, the puncturing unit 127 continues output of a signal punctured in the same pattern as that of the initially transmission packet signal until the ACK signal is input. If the ACK signal is input, the puncturing unit 127 performs the puncturing process with respect to the output data of the error correction coding unit 126, which refers to the next information data that is different from the information data transmitted in the previous packet signal initially transmitted, based on the pattern 1 or pattern 2.

On the other hand, in the case where the incremental redundancy IR is applied as the repeat scheme for the HARQ (Hybrid-ARQ), the puncturing unit 127 performs the puncturing process with respect to the data of the initially sent packet signal (data of the initially transmission packet signal) according to the pattern 1 of R=3/4 of FIG. 5, and outputs only the bits indicated as "1". The output signal of the puncturing unit 127, which has performed the puncturing process according to pattern 1 is transmitted from the antenna unit 101 by the transmission unit 102 after other processes are performed by the transmission signal generation unit 103. Also, if the NACK signal has been input as a response signal to the initially transmission packet signal (repeat request has been made), the puncturing unit 127 calls the encoded bit of the data transmitted as the initially transmission packet signal from the transmission data storage unit 128, and in this case, outputs the signal that has been punctured according to the pattern 2 of R=3/4 as the retransmission packet signal.

As described above, the puncturing unit 127 continues an alternate output of the signal that have been punctured according to pattern 1 and the signal that have been punctured according to pattern 2 until the ACK signal is input. If the ACK signal is input, the puncturing unit 127 performs the puncturing process with respect to the output data of the error correction coding unit 126, which refers to the next information data that is different from the information data transmitted in the previous packet signal initially transmitted, based on the pattern 1. If a predetermined number of the NACK signals are input, no further repeat may be performed, and the output data of the error correction coding unit 126 for the next different information data may be transmitted.

FIG. 6 is a schematic diagram illustrating another configuration of the encoding unit 121 that is different from that as in FIG. 2. In comparison to the configuration as illustrated in FIG. 2, an error correction coding unit 136, a puncturing unit 137, and a transmission data storage unit 138 are different from those as illustrated in FIG. 2. The transmission data storage unit 138 stores the error-detection-coded data such as the CRC that is performed by the error detection coding unit 125. The error correction coding unit 136 performs an error correction coding, such as a turbo code, and the like, with respect to the error-correction-coded data from the error correction coding unit 136. Also, if the NACK signal is input as the response signal, the error correction coding unit 136 requests the error-correction-coded data from the transmission data storage unit 138, acquires the error-detection-coded data stored in the transmission data storage unit 138, and performs the error correction coding. The puncturing unit 137 performs the puncturing process of the output data from the error correction coding unit 136 based on the predetermined pattern group. Also, even if the NACK signal is input as the response signal, the puncturing unit 137 performs the puncturing process of the output data from the error correction coding unit 136 based on the predetermined pattern group. The predetermined pattern group, for example, may be the puncturing pattern as illustrated in FIG. 5 in the same manner as the puncturing unit 127.

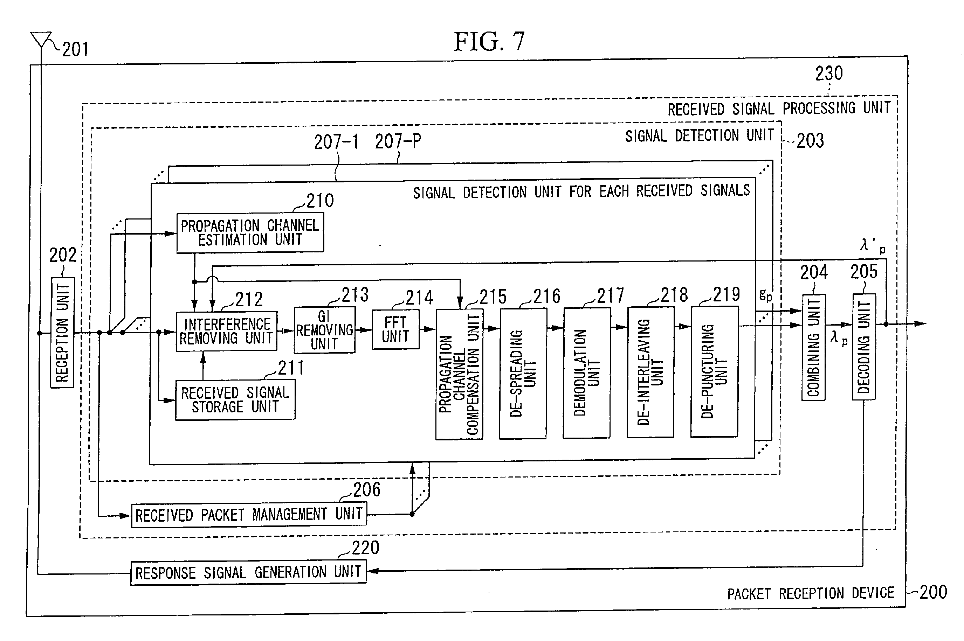

FIG. 7 is a schematic block diagram illustrating the configuration of a packet reception device 200 according to this embodiment. For example, the packet reception device 200 is provided in a mobile station device in a downlink and in a base station device in an uplink by a wireless communication system. Also, the packet reception device 200 is provided in a repeater station device in a downlink between the base station device and the repeater station device. The packet reception device 200 is provided with reception unit 202, a signal detection unit 203, a combining unit 204, a decoding unit 205, a received packet management unit 206, and a response signal generation unit 220.

An antenna unit 201 receives a signal transmitted from the packet transmission device 100, or transmits a signal including a response signal generated by the packet reception device 200. The reception unit 202 converts a signal received from the packet transmission device 100 through the antenna unit 201 into a frequency band in which a signal process such as a signal detection can be performed, performs a filtering process that performs a band restriction, and performs an analog-to-digital conversion with respect to the filtered signal.

The signal detection unit 203 is provided with signal detection units 207-1 to 207-P for each received signals that perform the signal detection with respect to the initially transmission packet signal which is received by the antenna unit 201 and converted into a digital signal by the reception unit 202 or the retransmission packet signal. The signal detection unit 207-1 to 207-P for each received signals performs a signal detection process such as removal of an interference component, conversion into a decodable data signal, and the like, with respect to the signal from the reception unit 202 for each packet signal (which includes the initially received signal (initial transmission signal) before the repeat request) received by the repeat request based on control information from the received packet management unit 206. Here, P is the maximum number of a sum of the number of packets received through the repeat request and the initially received packet signal (initially transmission packet signal) before the repeat request is not made. In a communication system adopting the HARQ, the output signal $r_p$ from the reception unit 202 for the p-th received signal is detected by the signal detection unit 207-p for each received signals.

In the HARQ, if the reception unit 202 receives the p-th packet signal, the signal detection unit 207-p for each received signals performs the signal detection of the p-th received retransmission packet signal and the signal detection unit 207-u for each received signals performs the signal process again with respect to the u-th ($1 \leq \mu \leq p-1$, u=1 refers to the initially transmission packet signal) received packet signal already received. For example, in the case where the reception unit 202 receives the p-th packet signal and the signal detection unit 207-p for each received signals performs the i-th interference removing process with respect to the p-th packet signal, the signal detection unit 207-u for each received signals performs again the i'-th ($1 \leq i' \leq i$) interference removing process even with respect to the u-th ($1 \leq u \leq p-1$) received packet signal already received.

In another example, if the reception unit 202 receives the p-th packet signal and the signal detection unit 207-p for each received signals performs the i-th interference removing process with respect to the p-th packet signal, the signal detection unit 207-u for each received signals performs again the i-th interference removing process even with respect to the u-th ($1 \leq u \leq p-1$) received packet signal already received.

The received packet management unit 206 acquires data regarding transmission parameters, such as the number of repetitions of the retransmission packet signal, data modulation scheme, code multiplexed number, and the like, from the retransmission control signal included in the received signal, and notifies the signal detection unit 203 of the acquired data. The combining unit 204 combines the output data series from the signal detection units 207-1 to 207-P for each received signals of the signal detection unit 203. For example, if the reception unit 202 receives the third (p=3) packet signal in the HARQ, the combining unit 204 combines the output data from the signal detection unit 207-1 for each received signals that performs the signal detection of the first (p=1) received packet signal (initially transmission packet signal), the output data from the signal detection unit 207-2 for each received signals that performs the signal detection of the second (p=2) received retransmission packet signal, and the output data from the signal detection unit 207-3 for each received signals that performs the signal detection of the third (p=3) received retransmission packet signal.

Also, if the reception unit 202 receives the p-th packet signal and the signal detection unit 207-p for each received signals outputs the data in which the i-th interference removing process has been performed with respect to the p-th packet signal, the combining unit 204 combines the data output in which the i-th interference removing process has been performed with respect to the p-th packet signal, and the data output in which the i'-th ($1 \leq i' \leq i$) interference removing process has been performed again with respect to the u-th ($1 \leq u \leq p-1$) received packet signal already received, by the signal detection unit 207-u for each received signals when the reception unit 202 receives the p-th packet signal. The number of repetitions i' may be set to a fixed value of i'>1.

Hereinafter, the case where, if the reception unit 202 receives the p-th packet signal and the signal detection unit 207-p for each received signals outputs the data in which the i-th interference removing process has been performed with respect to the p-th packet signal, the combining unit 204 combines the data output in which the i-th interference removing process has been performed with respect to the p-th packet signal, and the data output in which the i'-th interference removing process has been performed again with respect to the u-th (1≤u≤p-1) received packet signal already received, by the signal detection unit 207-u for each received signals when the reception unit 202 receives the p-th packet signal, will be described.

Here, if it is assumed that the output of the signal detection unit 207-u for each received signals in which the i-th repeat interference removing process has been performed with respect to the output signal $r_u$ from the reception unit 202 for the u-th received packet signal is $g_{u,i}(m)$ (where, m is an index of an encoded value constituting a packet, and the maximum value is the number of bits constituting the packet), the creation of the output signal $\lambda_{p,i}$ of the combining unit 204 which has received the p-th retransmission packet signal and has performed the i-th repeat interference removing process can be expressed by Equation (2).

[Equation 2]

$$\lambda_{p,i} = \sum_{u=1}^{P} \alpha_{u,i} g_{u,i}(m)$$

$\alpha_{u,i}$ is a weight coefficient provided with respect to the output $g_{u,i}(m)$ from the signal detection unit 207-u for each received signals, and is determined by a multi-value of the data modulation, encoding rate, spreading rate, code multiplexed number, and the like. For example, if it is assumed that the QPSK modulation is performed for $g_{u-1,i}(m)$ and 16QAM modulation is performed for $g_{u,i}(m)$, the demodulation accuracy of the QPSK modulation side becomes higher than that of the 16QAM modulation side in the same propagation channel state, and thus the combining unit 204 can perform the combining that reflects the demodulation accuracy for each data modulation by giving weight to satisfy the condition $\alpha_{u-l,i} > \alpha_{u,i}$.

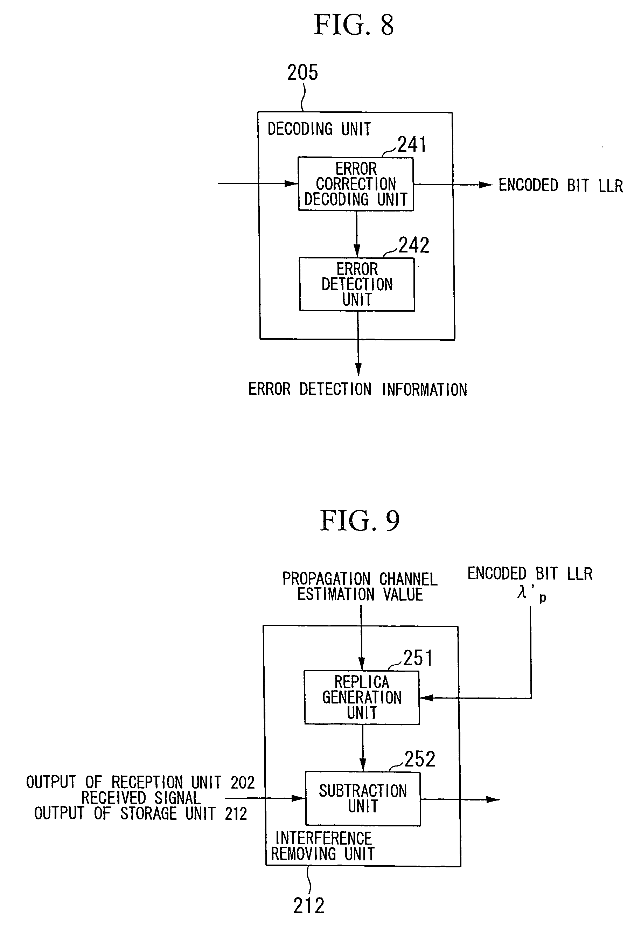

The decoding unit 205 performs a decoding process that corresponds to the encoding performed by the packet transmission device 100 that has transmitted the received signal with respect to the output signal of the combining unit 204. FIG. 8 is a schematic block diagram illustrating the configuration of the decoding unit 205. The decoding unit 205 includes an error correction decoding unit 241 and an error detection unit 242. If the reception unit 202 receives the p-th received packet (initially transmission packet or the (p-1)-th retransmission packet) and the signal detection units 207-1 to 207-P for each received signals perform the i-th repeat interference removing process, the decoding unit 205 performs a decoding process with respect to the output signal $\lambda_{p,i}$ of the combining unit 204. The error correction decoding unit 241 of the decoding unit 205 performs the error correction decoding process with respect to the error correction coding such as turbo encoding, convolution encoding, and the like, performed by the packet transmission device 100 of the transmitter, calculates the result of soft-decision output such as LLR (Log Likelihood Ratio) of the encoded bits, and inputs the calculated result to the error detection unit 242 of the decoding unit 205 and the interference removing unit 212 of the signal detection units 207-1 to 207-P for each received signals.

Preferably, the decoding unit 205 calculates the LLR of the output signal $\lambda_{p,i}$ of the combining unit 204, and inputs the LLR for the respective bits of the systematic bits and parity bits to the interference removing units 212 of the signal detection units 207-1 to 207-P for each received signals. Also, the decoding unit 205 inputs the LLR (Log Likelihood Ratio) of the systematic bits to the error detection unit 242.

The error detection unit 242 performs a soft-decision process with respect to the LLR of the encoded bits, and performs an error detection process with respect to the packet by the error detection such as CRC and so on that is performed by the packet transmission device 100 of the transmitter. Further, based on this error detection information, the error detection unit 242 performs decision whether to repeat the canceller process by the interference removing unit 212.

Here, referring back to FIG. 7, each of the signal detection units 207-1 to 207-P for each received signals includes a propagation channel estimation unit 210, a received signal storage unit 211, an interference removing unit 212, an GI removing unit 213, an FFT unit 214, a propagation channel compensation unit 215, an inverse spreading unit 216, a demodulation unit 217, a de-interleaving unit 218, and a de-puncturing unit 219. Portions that constitute the signal detection units 207-1 to 207-P for each received signals operate according to control information from the received packet management unit 206 in the case where the control information includes transmission parameters for the respective portions, such as a spreading code of the inverse spreading unit 216, a data modulation scheme of the demodulation unit 217, an alignment pattern of the de-interleaving unit 218, a puncturing pattern of the de-puncturing unit 219, and the like.

The propagation channel estimation unit 210 estimates the propagation channel (impulse response, transfer function, and the like) through which the received signal has passed from the pilot signal included in the output signal of the reception unit 202. At this time, the propagation channel estimation unit 210 may estimate the propagation channel using a control channel, a preamble, and the like, rather than a pilot signal. The interference removing unit 212 generates a replica of the interference component with respect to a desired signal using the propagation channel estimation value that is an output of the propagation channel estimation unit 210 and the output signal of the decoding unit 205, and removes the generated interference component replica from the output signal of the reception unit 202.

The GI removing unit 213 removes the GI (Guard Interval) added by the transmission/reception devices 100 to avoid the distortion caused by a delay wave from the signal from which the interference component replica has been removed by the interference removing unit 212. The FFT unit 214 performs a Fourier transform that transforms the signal from which the GI has been removed by the GI removing unit 213 from a time-domain signal to a frequency-domain signal. The propagation channel compensation unit 215 calculates the weight coefficient for correcting the distortion of the propagation channel by ZF (Zero Forcing), MMSE (Minimum Mean Square Error), and the like, using the propagation channel estimation value by the propagation channel estimation unit 210, and multiplies the weight coefficient by the frequency-domain signal from the FFT unit 214 to perform the propagation channel compensation. The inverse spreading unit 216 performs the de-spreading by multiplying the frequency-domain signal propagation-channel-compensated by the propagation channel compensation unit 215 by the spreading code of a desired code channel, to extract the signal of the code channel.

The demodulation unit 217 calculates the result of soft-decision such as LLR of the encoded bits by performing the demodulation process such as QPSK, 16QAM, or the like, with respect to the signal extracted by the de-spreading unit 216. The processing of the demodulation unit 217 which performs the QPSK modulation as an example will be described. Explanation will be made on the assumption that the QPSK symbol transmitted from the transmission side is X and the symbol after the de-spreading by the de-spreading unit 216 in the reception side is Xc. If it is assumed that bits constituting X are $b_0$ and $b_1$ (bo, $b_1 = \pm 1$), X can be expressed by Equation (3). However, j denotes an imaginary unit. Also, the LLR $\lambda(b_0)$ and $\lambda(b_1)$ of bits $b_0$ and $b_1$, which are from the estimated value Xc on the reception side of X, are obtained by the following Equation (4).

[Equation 3]

$$X = \frac{1}{\sqrt{2}}\left(b_0 + jb_1\right)$$

[Equation 4]

$$\lambda(b_0) = \frac{2\mathrm{Re}(X_c)}{\sqrt{2}(1-\mu)}$$

Re( ) denotes a real part of a complex number. $\mu$ is equivalent amplitude after propagation channel compensation. For example, if it is assumed that the propagation channel estimated value in the k-th sub-carrier is H(k) and the propagation channel compensation weight based on the multiplied MMSE is W(k), $\mu$ becomes W(k)H(k). Also, $\lambda(b_1)$ is obtained by substituting the real part for the imaginary part of $\lambda(b_0)$ in Equation (4). In this case, the result of soft-decision can be calculated with respect to the data of which different modulation such 16QAM has been performed based on the same principle. Also, the demodulation unit 217 may calculate the result of hard-decision rather than the result of soft-decision.

The de-interleaving unit 218 performs the alignment of bit arrangement that corresponds to the interleaved pattern performed by the interleaving unit 122 of the packet transmission device 100 of the transmitter, that is the alignment of the bit arrangement that is the inverse manipulation of the interleaved pattern, with respect to the data series of the result of soft-decision by the demodulation unit 217. The de-puncturing unit 219 performs a de-puncturing process for compensating the punctured bits in the puncturing process with predetermined bits with respect to the output data series from the de-interleaving unit based on the puncturing pattern performed by the puncturing unit 127 or 137 of the packet transmission device 100 of the transmitter.

For example, in the packet transmission device 100, the puncturing unit 127 or 137 performs the puncturing with respect to the bit stream (x1, z1, z1' x2, z2, z2') output from the error correction coding unit 126 or 136 with pattern 1 of the encoding rate R=1/2 as illustrated in FIG. 5, and outputs the punctured bit stream (x1, z1, x2, z2') to transmit the same. Here, x1 and x2 are systematic bits, and z1, z2, z1' and z2' are redundancy bits. In the packet reception device 200 having received the transmission bit stream ($x_r$1, $z_r$1, $x_r$2, $z_r$2'), the de-puncturing unit 219 inserts virtual value into positions that correspond to z1' and z2 which were punctured by the puncturing unit 127 or 137. Here, if the virtual value is set to "0", the de-puncturing unit 219 inserts "0" between the second bit and the third bit and between the third bit and the fourth bit of the input bit stream ($x_r$1, $z_r$1, $x_r$2, $z_r$2') to create and output the bit stream ($x_r$1, $z_r$1, 0, $x_r$2, 0, $z_r$2').

If the received signal is a code-multiplexed signal, the signal detection units 207-1 to 207-P for each received signals perform the process from the de-spreading unit to the puncturing unit with respect to the respective code channels of the received code-multiplexed signal.

The received signal storage unit 211 is notified of the number of packet transmissions in the received signal, and if the number of packet transmissions is in the range that the signal detection unit can take charge of, the reception unit 202 stores the received signal, while if the number of packet transmissions exceeds the range that the signal detection unit can take charge of, the reception unit 202 outputs the stored signal to the interference removing unit 212.

For example, if the reception unit 202 has received the first packet signal (the initially transmission packet signal) in the HARQ (Hybrid-ARQ), the received signal storage unit 211 provided in the signal detection unit 207-1 for each received signals stores the output signal of the reception unit 202 that has received the first packet signal. Further, if the reception unit 202 has received a second and subsequent packet signals, the received signal storage unit 211 provided in the signal detection unit 207-1 for each received signals inputs the stored first packet signal to the interference removing unit 212 provided in the signal detection unit 207-1 for each received signals.

FIG. 9 is a schematic block diagram illustrating the configuration of the interference removing unit 212. The interference removing unit 212 includes a replica generation unit 251 and a subtraction unit 252. The replica generation unit 251 generates a signal replica that is transmitted by the packet transmission device 100 that is the transmitter of the receive signal using the LLR λp' of the encoded bits from the decoding unit 205. For example, if the signal transmitted from the packet transmission device 100 is received, the replica generation unit 251 generates a signal replica for the signal S(k) in Equation (1). Further, an interference replica is generated using the signal replica and the propagation channel estimation value from the propagation channel estimation unit 210. The subtraction unit 252 subtracts the interference replica from the input signal of the reception unit 202 to remove the interference component.

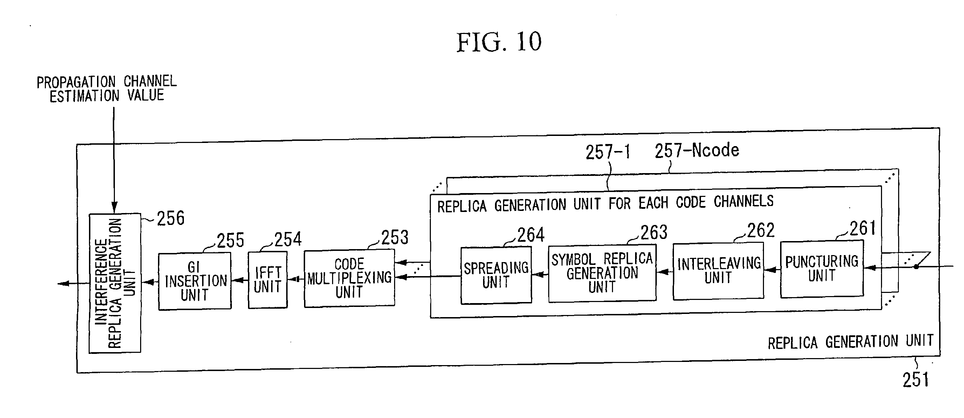

FIG. 10 is a schematic block diagram illustrating the configuration of the replica generation unit 251 that generates the interference replica of the ISI (Inter-Symbol Interference). Here, the case where the replica generation unit 251 generates the interference replica in the unit of a packet length $T_f$ as shown in FIG. 4.

The replica generation unit 251 includes replica generation units 257-1 to 257-$N_{code}$ for each code channels, a code multiplexing unit 253, an IFFT unit 254, a GI insertion unit 255, and an interference replica generation unit 256. The replica generation units 257-1 to 257-$N_{code}$ for each code channels generate signal replicas for respective code channels, and each of the replica generation units 257-1 to 257-$N_{code}$ is provided with a puncturing unit 261, an interleaving unit 262, a symbol replica generation unit 263, and a spreading unit 264.

The puncturing unit 261 performs the puncturing process with respect to the LLR λp' of the encoded bits that is the output signal of the decoding unit 205 using the same pattern as the puncturing pattern performed by the puncturing unit 127 or 137 of the packet transmission device 100 that is the transmitter. The interleaving unit 262 performs the alignment process of the bit arrangement with respect to the output signal of the puncturing unit 261 using the same pattern as the alignment pattern performed by the interleaving unit 122 of the packet transmission device 100 of the transmitter. The symbol replica generation unit 263 generates a modulation symbol replica by performing modulation such as QPSK modulation, 16QAM modulation, or the like, with respect to the output signal of the interleaving unit 262. The processing of the symbol replica generation unit 263 which performs the QPSK modulation as an example will be described. If it is assumed that the LLRs of the bits $b_0$ and $b_1$ that constitute the QPSK modulation symbol are $\lambda(b_0)$ and $\lambda(b_1)$, the replica of the QPSK modulation symbol is given as in Equation (5). Here, j denotes an imaginary unit. At this time, even in the case of another modulation such as 16QAM, it is possible to generate the symbol replica in the same principle.

[Equation 5]

$$\frac{1}{\sqrt{2}}\tanh(\lambda(b_0)/2) + \frac{j}{\sqrt{2}}\tanh(\lambda(b_1)/2)$$

The spreading unit 264 generates the signal replica for each code channel by multiplying the output signal of the symbol replica generation unit 263 by the spreading code series of the respective code channels. The code multiplexing unit 253 performs the code multiplexing with respect to the signal replicas for the respective code channels generated by the replica generation units 257-1 to 257-$N_{code}$ for each code channels. If it is assumed that the output signal for the k-th sub-carrier of the code multiplexing unit 253 of the signal detection unit 207-p for each received signals in the i-th process of the repeat interference removing process in the case of receiving the p-th retransmission packet signal of the HARQ is $S'_{p,i}(k)$, it is expressed by Equation (6).
[Equation 6]

$$S'_{p,i}(k) = \sum_{u=0}^{N_{code}-1} c_{u,k \bmod SF} d'_{p,u,i}\left(\left\lfloor \frac{k}{SF} \right\rfloor\right)$$

where, $\lfloor \alpha \rfloor$ is the largest integer number that is equal to or smaller than $\alpha$. $N_{sub}$ is the number of sub-carriers. $N_{code}$ is the code multiplexed number. SF is a spreading rate, that is, k=0, 1, 2, ..., $N_{sub}$-1. $d'_{p,u,i}$ is an output signal of the symbol replica generation unit. $C_{u,1}$ is a value of the first chip of the spreading code series of the u-th channel.
The IFFT unit 254 performs frequency-time transform by performing an Inverse Fourier transform with respect to the output signal of the code multiplexing unit 253. The GI insertion unit 255 inserts the GI into the output signal of the IFFT unit 254. The interference replica generation unit 256 generates the interference replica of the ISI using the output signal of the GI insertion unit 255 and the propagation channel estimated value from the propagation channel estimation unit 210. If it is assumed that the output signal of the GI insertion unit 255 is $s'_{p,i}$, and the propagation channel estimated value from the propagation channel estimation value is $h'_p$ in the i-th repeat interference removing process in the case of receiving the p-th received packet in the HARQ, the interference replica $r'_{p,i}(t)$ (where, t is a packet length period, t≤Tf) of the ISI for the input signal $r_p(t)$ of the signal detection unit 207-p for each received signals from the reception unit 202 is given as in Equation (7). That is, since the interference replica $r'_{p,i}$, which is a delay wave of the signal before the corresponding symbol period, has a great delay, the delay wave that lies over the corresponding symbol period is added.
[Equation 7]

$$r'_{p,i}(t) = h'_p(t) \otimes s'_{p,i}\left(t - \left(T_s + T_{gi}\right)\right)$$

where, in the case of the first process (i=1), $r'_{p,i}(t)$=0. t is time. $T_s$ is an OFDM symbol length. $T_{gi}$ is an inserted GI length. $\otimes$ denotes a convolution operation.
Accordingly, the output signal $r''_{p,i}(t)$ (where, t is a packet length period, t≤$T_f$) of the subtraction unit 252 in the i-th process in the repeat interference removing process in the case of receiving the p-th packet in the HARQ is given as in Equation (8).
[Equation 8]

$$r''_{p,i}(t) = r_p(t) - r'_{p,i-1}(t)$$

At this time, it is also possible to remove the ISI in the packet signal by the retransmission control signal and pilot signal.

As an example of the interference removing unit 212, a configuration that removes the ISI is described. However, the interference removing unit is not limited thereto, and it is also possible to remove the respective interference components by generating interference replicas of the MCI, the ICI, and the like. For example, the interference replica of the MCI can be generated by code-multiplexing the output of the replica generation unit for each code channels except for a desired code channel, IFFT-processing the code-multiplexed signal, inserting the GI, and performing the convolution of the propagation channel estimated value. For example, in the i-th interference removing process in the case of receiving the p-th packet, the interference replica $r'_{p,i}$ of the MCI generated by the replica generation unit 251 of the signal detection unit 207-p for each received signals is given as in Equation (9-1).

[Equation 9-1]

$$r'_{p,i}(t) = h'_p(t) \otimes s'_{p,i}(t)$$

where, S'p,i (t) is a signal obtained by performing the IFFT process and the GI insertion of S'p,i (k) in Equation (9-2) that is obtained by code-multiplexing the code channel replica except for a desired code channel. Also, $\otimes$ denotes a convolution operation.

[Equation 9-2]

$$S'_{p,i}(k) = \sum_{u=0, u \neq U}^{N_{code}-1} c_{u, k \bmod SF} \, d'_{p,u,i}\left(\left\lfloor \frac{k}{SF} \right\rfloor\right)$$

U is a desired code channel.

In this case, although the interference removing unit 212 of FIG. 7 has a configuration of removing the interference component in the time-domain region, it is also possible to remove the interference component in the frequency-domain region. Specifically, it becomes possible by arranging the interference removing unit that removes the interference component after the FFT process by the FFT unit 214.

The response signal generation unit 220 of FIG. 7 generates a data series that includes control data indicating the existence/nonexistence of a packet error from the result of error detection by the decoding unit 205 when the iteration process of the signal detection unit 203 and the decoding unit 205 is performed for a prescribed number of times, and generates a response signal by performing a signal process such as an error correction coding, data modulation, and the like. Further, the response signal is converted into an analog signal (digital-to-analog conversion), converts the analog response signal into a transmittable frequency band, and transmits the response signal to the packet transmission device 100 through the antenna 201. The communication scheme of the response signal may be either OFDM or single carrier modulation scheme, and it is sufficient if the communication scheme corresponds to the processing of the restoration unit 105 in the packet transmission device 100 of the other communication party.

That is, the response signal generation unit 220, if a signal that indicates "No packet error exists" is input from the decoding unit 205, generates an ACK signal that indicates that the reception has been correctly completed as a response signal, and transmits the ACK signal to the packet transmission device 100 of the transmitter through the antenna unit 201. Also, if a signal that indicates "Packet error exists" is input from the decoding unit 205, the response signal generation unit 220 generates a NACK signal that indicates the repeat request of the packet as a response signal, and transmits the NACK signal to the packet transmission device 100 of the transmitter through the antenna unit 201.

In this embodiment, it is described that the repeat request is performed in a code channel unit (packet unit). However, the repeat request unit is not limited thereto, and at least one error detection code may be added to the repeat request unit.

In this embodiment, the signal detection unit 203 of the data receiver device 200 is provided with a plurality of signal detection units for each received signals, and in repeating the signal detection and decoding, signal detection is performed in parallel with respect to a plurality of received signals including signals of an initially transmission packet or retransmission packets. However, the signal detection unit 203 may be provided with one signal detection unit for each received signals, and the signal detection may be successively performed with respect to the plurality of received signals.

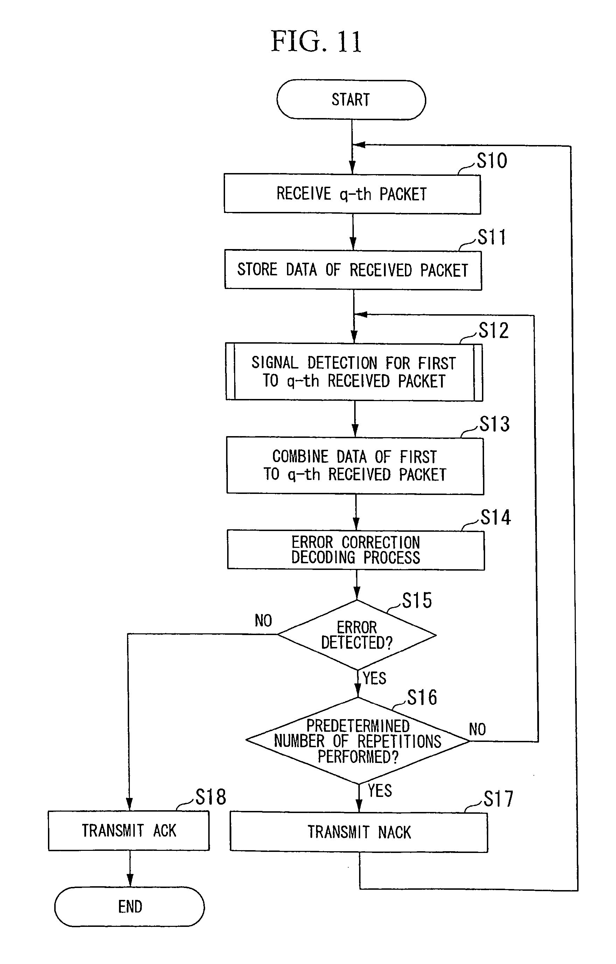

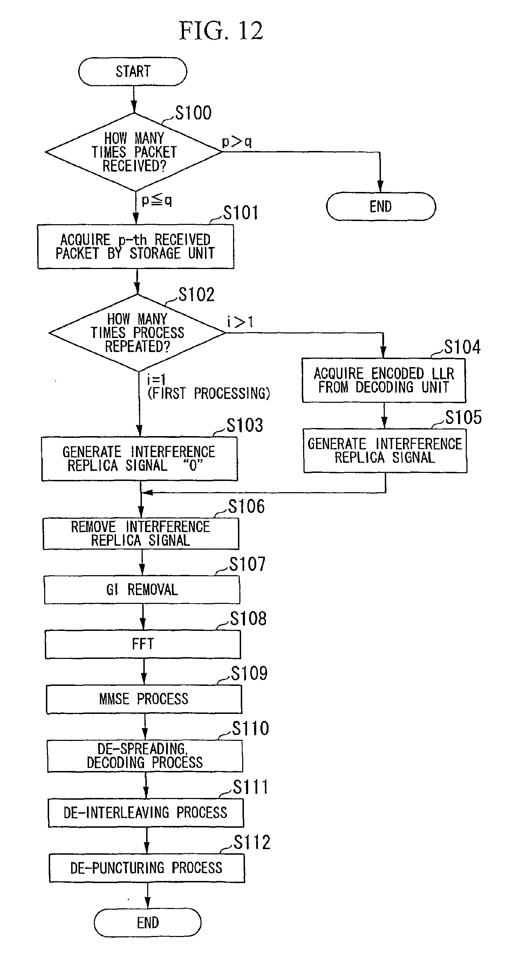

FIG. 11 is a flowchart illustrating an operation of a packet reception device 200. If the reception unit 202 receives the q-th packet signal in the HARQ (step S10), the received packet management unit 206 determines the number of packet transmissions (here, q times) in the received signal from the retransmission control signal of the received signal, and stores data of the received packet signal in the received signal storage unit 211 of the signal detection unit 207-q for each received signals that takes charge of the processing of the q-th packet as the result of determination (step S11). Then, the signal detection units 207-1 to 207-q for each received signals perform the signal detection process by reading the signals of the first packet (initially transmission packet) to the q-th packet from the respective received signal storage unit 211 (step S12). The contents of the processing in step S12 will be described in detail with reference to FIG. 12. Here, it is described that when the q-th packet is received, the signal detection is performed with respect to the q-th packet and all the previous packets (first packet to (q-1)-th packet) before the q-th packet. However, it is also possible to perform the signal detection with respect to one or more packets among the packets before the q-th packet.

Next, the combining unit 204 performs the combining of the data signals detected by the signal detection units 207-1 to 207-q for each received signals (step S13). That is, the data signals detected from the first to q-th packet signals are combined. Then, the error correction decoding unit 241 of the decoding unit 205 performs the error correction decoding process with respect to the data signals combined by the combining unit 204 (step S 14). Further, the error detection unit 242 of the decoding unit 205 determines the existence/nonexistence of the error by performing the error detection process with respect to the result of error correction decoding process (step S 15). In step S 15, if it is determined that no error exists, the response signal generation unit 220 generates an ACK signal, and transmits the ACK signal to the packet transmission device 100 of the transmitter (step S 18). On the other hand, if it is determined that the error exists in step S15, the decoding unit 205 determines the number of repetitions of a series of the repeat interference removing process of the signal detection using removal of the interference replica, which is generated using the LLR of the encoded bits after the error correction decoding process, from the received signal, the combining process, and the decoding process (step S16).

If the number of repetitions does not reach a predetermined number, the processing returns to step S12, the signal detection using the removal of the interference replica from the received signal is performed with respect to the first received packet (initially transmission packet) to the q-th received packet, and then the combining process and the decoding process are performed as described above. On the other hand, in step S 16, if it is determined that the number of repetitions reaches a predetermined number, the response signal generation unit 220 generates a NACK signal, and transmits the NACK signal to the packet transmission device 100 of the transmitter through the antenna unit 201 (step S 17). Then, the processing returns to step S10, and the reception unit 202 receives the (q+1)-th packet signal which follows the packet received in step S10 and which is transmitted from the packet transmission device 100 that has received the NACK signal.

FIG. 12 is a flowchart illustrating operations of the signal detection unit 207-p for each received signals, which performs a signal detection process with respect to the received signal including the p-th transmission packet in the HARQ in step S12 of FIG. 11 and related units a signal detection unit 207-p for each received signals and respective related units. The signal detection unit 207-p for each received signals which is notified of the number of packet transmissions (here, q times) that is included in the signal received from the received packet management unit 206 to the reception unit 202, compares the number of packet transmissions p with the number of packet transmissions q from the received packet management unit 206 (step S100). If p is larger than q (p>q), the processing is ended.

On the other hand, if p is equal to or smaller than q (p≤q) as the result of comparison in step S100, the interference removing unit 212 reads the data of the signal stored in the received signal storage unit 211 of the signal detection unit 207-p for each received signals (step S101). However, if p is equal to q (p=q), the output of the reception unit 202 is read. Then, the interference removing unit 212 determines the number of repetitions of the signal detection and the decoding (step S102), and if it is determined that the processing is the first processing (i=1), it generate "0" as the interference replica (step S 103). On the other hand, if it is determined that the processing is the second processing (i>1) in step S102, the replica generation unit 251 of the decoding unit 205 acquires the LLR of the encoded bits generated by the error correction decoding unit 241 of the decoding unit 205 in the previous iteration process (step S104). Then, the replica generation unit 251 generates the interference replica using the acquired LLR of the encoded bits (step S105).

After the processing in step S103 or S105, the subtraction unit 252 of the interference removing unit 212 performs the removal of the interference component by subtracting the interference replica generated by the replica generation unit 251 from the signal (p-th packet signal) read in step S101 (step S106). Then, the GI removing unit 213 removes the GI from the signal from which the interference replica is subtracted (step S107). Then, the FFT unit 214 obtains the frequency region signal by performing the time-frequency transform through the FFT transform of the signal from which the GI has been removed (step S 108). Then, the propagation channel distortion compensation unit 215 multiplies the MMSE (Minimum Mean Square Error) weight based on the propagation channel estimated value with respect to the frequency region signal (step S109).

Next, the de-spreading unit 216 performs the de-spreading process for multiplying the result of multiplication by the spreading code of a desired code channel, and the demodulation unit 217 performs the demodulation process for demodulating the data modulation with respect to the result of de-spreading process (step S 110). Then, the de-interleaving unit 218 performs the de-interleaving that corresponds to the alignment of the bit positions corresponding to the inverse operation of the interleave unit 122 of the packet transmission device 100 (step S111). Then, the de-puncturing unit 219 performs the de-puncturing process with respect to the result of de-interleaving (step S 112), and then outputs a signal of the result of de-puncturing process.

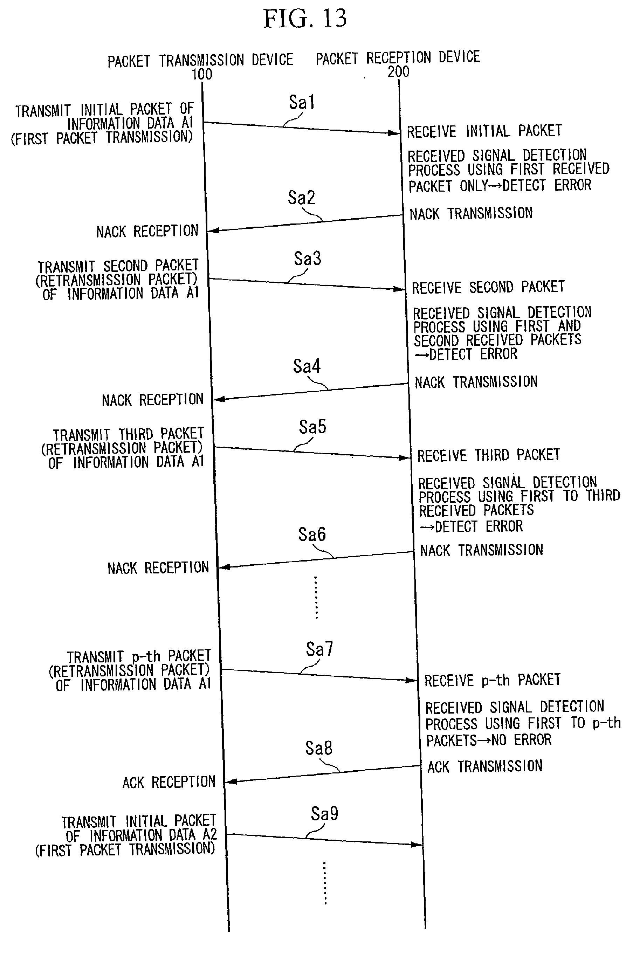

FIG. 13 is a sequence diagram illustrating an operation example of a communication system to which a HARQ scheme having a packet transmission device 100 and a packet reception device 200 is applied. First, the packet transmission device 100 transmits the first frame in which a packet that includes encoded data of the information data A1 is arranged, and performs the initial transmission (initially transmission packet transmission) to the packet reception device 200 (step Sa1). The initial transmission packet is a packet that includes data obtained by puncture-processing the encoded data of the information data A1 with a predetermined puncturing pattern. If the reception device 200 receives the initial transmission packet, it performs the signal processing such as interference removing process, demodulation, decoding, or the like, using the first received packet, and performs the error detection of the data. If an error occurs, the packet reception device 200 transmits the NACK signal to the packet transmission device 100 (step Sa2).

If the NACK signal is received, the packet transmission device 100 transmits a second frame in which a packet including the encoded data of the information data A1 is arranged, and performs the retransmission (second packet transmission) to the packet reception device 200 (step Sa3). In the case of adopting the HARQ based on the CC in the communication system, the second transmission packet in step Sa3 is a packet punctured by the initial transmission packet and the same pattern with respect to the information data A1. For example, in the case where the initial transmission packet is punctured by pattern 1 of the encoding rate R=3/4 of FIG. 5, the second transmission packet is also punctured by pattern 1 of the encoding rate R=3/4.

In the case of adopting the HARQ based on the IR (Incremental Redundancy) in the communication system, the second transmission packet is punctured by a pattern different from the initial transmission packet with respect to the encoded data of the information data A1. For example, in the case where the initial transmission packet is punctured by pattern 1 of the encoding rate R=3/4 of FIG. 5, the second transmission packet, for example, is punctured by pattern 2 of the encoding rate R=3/4.

If the second transmission packet transmitted from the sequence Sa3 is received, the packet reception device 200 performs the error detection of the decoded data by repeating the signal processes such as signal detection including the interference removing process for the first and second packets, combining, and decoding. Here, if an error is detected, the packet reception device 200 transmits the NACK signal (step Sa4).

The packet repeat is performed between the packet transmission device 100 and the packet reception device 200 (steps Sa5 to Sa7) until the data error is not detected (until the ACK signal is received), or until the predetermined number of repetitions is completed in a communication system adopting the HARQ, and the packet reception device 200 transmits the ACK signal for the packet signal including the information data A1 (step Sa8). If this ACK signal is received, the packet transmission device 100 ends the packet transmission including the encoded data of the information data A1. Also, the packet transmission device 100 performs the initial transmission of the packet including the encoded data of information data that is different from the information data A1 (step Sa9).

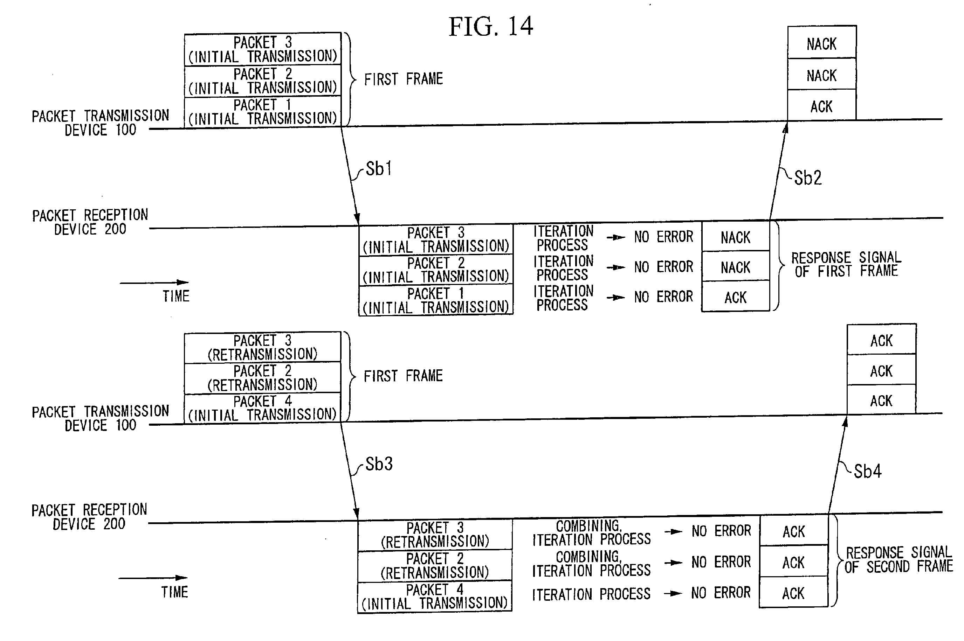

In the embodiment as described above, it is described that the number of repetitions of packets constituting a frame is the same. However, the initially transmission packet and the retransmission packets may coexist. As an example of the case where the initially transmission packet and the retransmission packets coexist in the frame, the case where three packets are code-multiplexed and transmitted for each frame is illustrated in FIG. 14. In the case of transmitting a frame, information on the numbers inherent to the respective packets and the number repetitions is transmitted by the retransmission control signal.

The packet transmission device 100 arranges the packets 1 to 3, which are the initially transmission packets, in the first frame, and transmits the packet to the packet reception device 200 (step Sb1) If the first frame is received, the signal processing unit 207-1 for each received signals of the packet reception device 200 performs the signal detection process using the removal of the interference replica from the received signal, and a series of repeat interference removal of the decoding process by the decoding unit 205 (since the entire packets are initially transmission packets, combining is not performed) with respect to the respective packets of the first frame. It is assumed that after the interference removing process is iteratively performed for a predetermined number of repetitions, no error is detected in packet 1, and an error is detected in packet 2 and packet 3. The packet reception device 200 transmits the ACK signal for the packet 1 and the NACK signal for performing the repeat request for the packet 2 and packet 3 to the transmission device 100 (step Sb2). At this time, the received signal storage unit 211 of the signal processing unit 207-1 for each received signals stores the initially transmission packet signals of the packets 1, 2, and 3.

The packet transmission device 100 generates a second frame by code-multiplexing the retransmission packet (the second transmission packet) of the packet 2 and packet 3 and the initially transmission packet of a new packet 4 based on the response signal (the ACK signal and the NACK signal) from the packet reception device 200, and transmits the generated second frame to the reception device 200 (step Sb3).

If the packet reception device 200 receives the second frame transmitted by the packet transmission device 100 in the sequence Sb3, the signal processing unit 207-2 for each received signals performs the signal detection processing using the removal of the interference replica from the received signal with respect to the packets 2 to 4 of the second frame. Simultaneously with this, the signal processing unit 207-1 for each received signals performs the signal detection processing using the removal of the interference replica from the received signal with respect to the packets 1 to 3 received from the first frame. At this time, since the packet 1 of the first frame can be correctly received, the signal detection processing is not performed, and in generating the interference replica for the packets 2 and 3, the signal replica of the packet 1 generated from the result of soft-decision may be used.

With respect to packet 2, the combining unit 204 combines the data series of packet 2 of the first frame output from the signal processing unit 207-1 for each received signals and the data series of packet 2 of the second frame output from the signal processing unit 207-2 for each received signals, and outputs the combined data to the decoding unit 205. In the same manner, with respect to packet 3, the combining unit 204 combines the data series of packet 3 of the first frame output from the signal processing unit 207-1 for each received signals and the data series of packet 3 of the second frame output from the signal processing unit 207-2 for each received signals, and outputs the combined data to the decoding unit 205. With respect to packet 4, the combining unit 204 outputs the data series of packet 4 of the second frame output from the signal processing unit 207-2 for each received signals to the decoding unit 205, without performing combining with other packets.

The decoding unit 205 performs the decoding process of the data series of packets 2 to 4 output from the combining unit 204. Among the decoding results, the LLR of the encoded bits for the data series of packet 2 and packet 3 is output to the signal processing unit 207-1 for each received signals and the signal processing unit 207-2 for each received signals, respectively, and the LLR of the encoded bits for the data series of packet 4 is output to the signal processing unit 207-2 for each received signals. The signal processing unit 207-1 for each received signals and the signal processing unit 207-2 for each received signals perform the signal detection using the removal of the interference replica from the received signal using the LLR of the encoded bits for the data series of packets 2 to 4 from the decoding unit 205. The series of repeat interference removing process of the signal process using the removal of the interference replica from the received signal, the combining, and the decoding are repeated for the predetermined number of repetitions.

As the result of signal processing when the second frame is received, the error detection unit 242 does not detect an error with respect to all packets 2 and 4. The packet reception device 200 transmits the ACK signal to the transmission device 100 as a response signal with respect to the packets 2 to 4 (step Sb4).

As described above, if the packet reception device 200 provided with the interference removing unit 212 that performs the repeat interference removing receives a packet in a communication system that performs the packet communication using the HARQ that combines the ARQ and an error correction encoding such as a turbo encoding, the interference removing process of the received retransmission packet, the repeated interference removing process for the packet received before the received retransmission packet, and combining and decoding of the signal detected through the interference removing process are iteratively performed. Accordingly, in the repeat interference removing process for the packet received before the received retransmission packet, the interference replica is generated based on the combined signal including a newly received packet, and thus the interference replica having a good accuracy rather than the previous repeat interference removing process can be used, thereby improving the data decoding accuracy for the initially transmission packet and the retransmission packets. As a result, it is possible to reduce the number of repetitions of the interference removing process (signal detection), combining, and decoding and the number of repetitions of the HARQ.

In this embodiment, a PIC (Parallel Interference Canceller) is used as an interference canceller using the interference removing unit 212 of the packet reception device 200. However, an SIC (Successive Interference Canceller) may also be used.

Also, in this embodiment, in receiving the retransmission packet, the packet reception device 200 provided with an interference canceller has been used as a communication device for performing the signal detection even with respect to the packet signal data received before the retransmission packet. However, the communication device may perform an iteration process using the signal detection by an equalizer using the result of decoding process and a turbo concept such as a turbo equalizer that repeats the decoding process of the processing result of the equalizer.

Also, in this embodiment, it is described that in receiving the retransmission packet, the signal processing units 207-1 to 207-p for each received signals perform the repeat interference removing process with respect to the entire packets received before the retransmission packets. However, the repeat interference removing process can be performed only with respect to a portion of the packet received before the retransmission packet.

Also, it is described that the combining unit 204 combines signals of all the initially transmission packets and retransmission packets. For example, it is also possible to combine only signals of a part (equal to or smaller than the predetermined number of products, starting from the side having a large reception power) of the packets. Also, in the case of combining only the signals of a part of the packets, the combining unit 204 may make the signal of the initially transmission packets included in the signal to be combined. In particular, in the case of using the IR (Incremental Redundancy) in the HARQ, by making the signal of the initially transmission packets constantly included in the signals to be combined, the systematic bit signal can also be constantly included in the signal to be combined, and thus the considerable deterioration of the accuracy of the result of combining specified bits can be suppressed.

Also, in the above-described embodiment, the case where the MC-CDM is adopted as the packet transmission scheme is described. However, if a reception processing unit having a signal detection function using iteration processes is provided, it can be applied to a multi-carrier transmission scheme such as OFDM, OFDMA, IMDA (Interleave Division Multitple Access), and the like, or a single-carrier transmission scheme.

Further, if the retransmission packet of the HARQ is received in a packet reception device that performs the stream separation using the iteration process, such as V-BLAST, successive interference canceller SIC, or the like, in MIMO (Multi Input Multi Output) transmission, the repeat stream separation process with respect to the received retransmission packet and even the packet received before the retransmission packet can be performed, and then the combining and decoding of the received packets can be performed. At this time, the application of the MIMO using V-Blast or successive interference canceller SIC will be described in detail in the third embodiment of the invention.

[Second Embodiment]

In the second embodiment of the present invention, if a packet is received by a communication device including an interference canceller which uses an iteration process in a communication system that performs a packet communication adopting the HARQ (Hybrid ARQ) scheme, the communication device is provided with an interference removing unit that performs an interference removing process even with respect to packet signal data received before the retransmission packet when the retransmission packet signal is received. Specifically, the packet reception device (second communication device) 200a in this embodiment has a configuration that combines the signals of which the interference component removing process has been performed for each retransmission packet before performing the decoding process, and particularly is applied to the HARQ using the CC (Chase Combining).

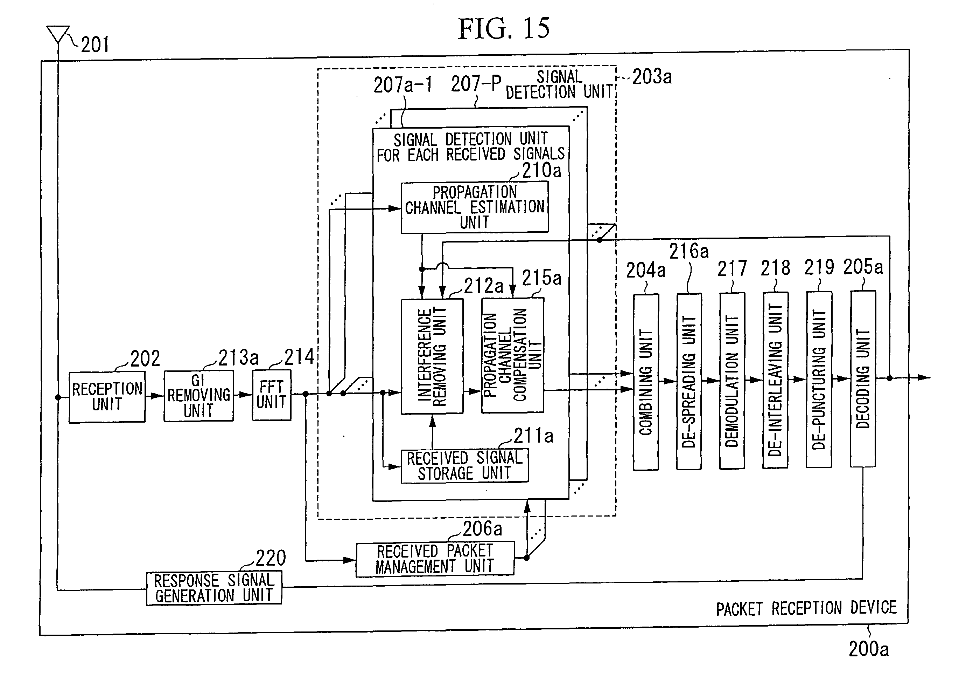

In this embodiment, the packet transmission device 100 has the same configuration as that of the transmission device 100 according to the first embodiment, and thus a detailed description thereof will be omitted. FIG. 15 is a schematic block diagram illustrating a configuration of a packet reception device 200a according to this embodiment. The packet reception device 200a of FIG. 15 includes a reception unit 202, a GI removing unit 213a, an FFT unit 214, signal detection units 207a-1 to 207a-P for each received signals, a combining unit 204a, a de-spreading unit 216a, a demodulation unit 217, a de-interleaving unit 218, a de-puncturing unit 219, a decoding unit 205a, a received packet management unit 206a, and a response signal generation unit 220. In the drawing, the same reference numerals are given to the parts 201, 202, 214, and 217 to 220 that correspond to the respective parts in FIG. 7, and a detailed explanation thereof will be omitted. In this case, the signal detection unit 203a is composed of signal detection units 207a-1 to 207a-P for each received signals.

The GI removing unit 213a is different from the GI removing unit 213 in FIG. 7 on the point that the input signal is the output signal of the reception unit 202, and removes the GI added by the transmission device 100 to avoid the distortion caused by a delay wave among the output signals of the reception unit 202. The received packet management unit 206a acquires data regarding transmission parameters, such as the number of repetitions, data modulation scheme, code multiplexed number, and the like, from the retransmission control signal included in the frequency-domain signal that is transformed by the FFT unit 214, and notifies the signal detection units 207a-1 to 207a for each received signals of the acquired data. The signal detection units 207a-1 to 207a-P for each received signals performs the removal of the interference component and the propagation channel compensation with respect to the output signal of the FFT unit 214 for every packet signals received in response to the repeat request, based on the control information from the received packet management unit 206a. P is the maximum number of the sum of the number packets received in response to the repeat request and the initially received packet signals (initially transmission packet signals) in response to the repeat request. In the packet reception device 200a, the output signal $r_p$ of the FFT unit 214 for the p-th received signal makes the signal detection unit 207a-p for each received signals perform the removal of the interference component.

In the HARQ, if the reception unit 202 receives the p-th packet signal ((p-1)-th retransmission packet signal), the signal detection unit 207a-p for each received signals performs the interference removing process with respect to the p-th packet signal, and the signal detection unit 207a-u for each received signals performs the interference removing process with respect to the u-th (1≤u≤p-1) received packet signal.

For example, in the case where the reception unit 202 receives the p-th packet signal and the signal detection unit 207a-p for each received signals performs the i-th interference removing process with respect to the p-th packet signal, the signal detection unit 207a-u for each received signals performs the i'-th (1≤i'≤i) interference removing process with respect to the u-th (1≤u≤p-1) received packet signal.

Hereinafter, the case where i'=i will be described.

Each of the signal detection units 207a-1 to 207a-P for each received signals includes a propagation channel estimation unit 210a, an interference removing unit 212a, a propagation channel compensation unit 215a, and a received signal storage unit 211a. Portions that constitute the signal detection units 207a-1 to 207a-P for each received signals operate based on control information from the received packet management unit 206a. The propagation channel estimation unit 210a estimates the propagation channel (impulse response, transfer function, and the like) through which the received signal has passed from the pilot signal included in the output signal of the FFT unit 214. At this time, the propagation channel estimation may be performed using a control channel, a preamble. The interference removing unit 212a generates a replica of the interference component using the propagation channel estimation value that is an output of the propagation channel estimation unit 210a and the output signal of the decoding unit 205a, and removes the generated interference replica from the output signal of the FFT unit 214.

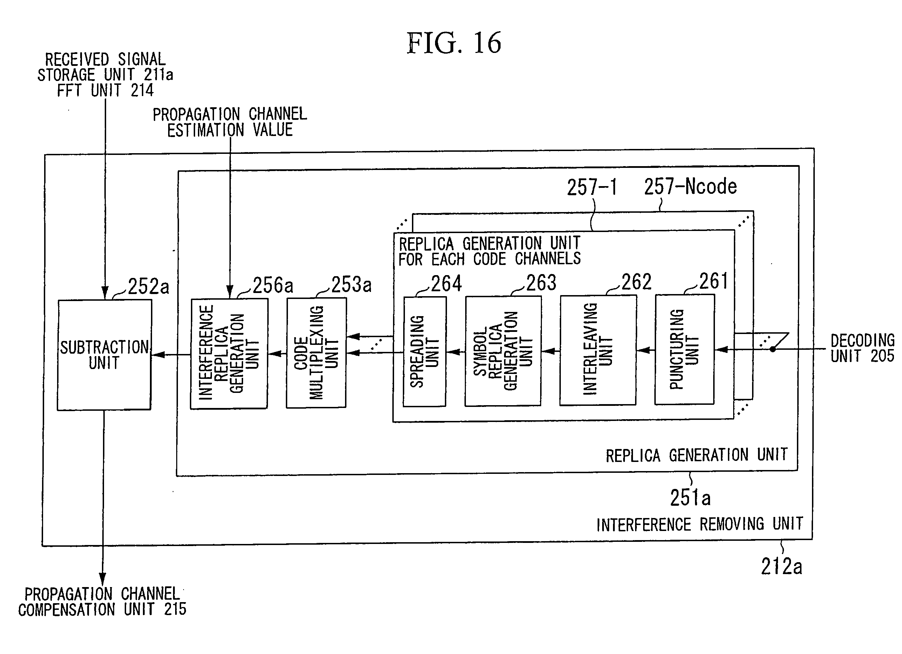

The propagation channel compensation unit 215a calculates the weight coefficient for correcting the distortion of the propagation channel by ZF (Zero Forcing), MMSE (Minimum Mean Square Error), and the like, using the propagation channel estimation value that is the output of the propagation channel estimation unit 210a, and multiplies the weight coefficient by the output signal from the interference removing unit 212a. The received signal storage unit 211 a stores the frequency-domain signal input from the FFT unit 214 in the signal detection unit for each received signals that belongs thereto, and if there is an input from the FFT unit 214 to the reception processing unit for each received signal that does not belong thereto, the received signal storage unit 211 a output the stored frequency-domain signal to the interference removing unit 212a. The interference removing unit 212a, in the same manner as the interference removing unit 212 of FIG. 7 according to the first embodiment, is composed of a replica generation unit 251a and a subtraction unit 252a as shown in FIG. 16, but is different from the interference removing unit 212 according to the first embodiment on the point that the input signal is the frequency-domain signal from the FFT unit 214 or the received signal storage unit 211a.

The subtraction unit 252a subtracts the replica signal generated by the replica generation unit 251 a from the frequency-domain signal from the FFT unit 214. When the p-th packet is received, the subtraction unit 252a of the signal detection unit 207a-p for each received signals, in the case of the i-th interference removing process, calculates the output signal $R''_{n,p,i}(k)$ for the n-th code channel as indicated in Equation (10). Here, $R_p(k)$ is data of the p-th received packet, $R'_{p,i-1}(k)$ is an interference replica signal based on the result of decoding at (i-1)-th repetition output from the replica generation unit 251a. Also, k and i are a sub-carrier index (the number of sub-carriers) and the number of repetitions of the interference canceller.

[Equation 10]

$$R''_{n,p,i}\left(k\right) = R_p\left(k\right) - R'_{n,p,i-1}\left(k\right)$$

The replica generation unit 251a generates a replica of the interference component using the LLR of the encoded bits from the decoding unit 205a and the propagation channel estimation value from the propagation channel estimation unit 210a. FIG. 16 shows, as an example, the configuration of the replica generation unit 251a in the case of generating the interference replica of the MCI. The replica generation unit 251 a includes replica generation units 257-1 to 257-$N_{code}$ for each code channels, a code multiplexing unit 253a, and an interference replica generation unit 256a. $N_{code}$ is a code multiplexed number of the received signal. The replica generation units 257-1 to 257-$N_{code}$ for each code channels generate signal replicas for respective code channels as expressed in Equation (11) based on the i-th result of decoding.

[Equation 11]

$$S''_{p,n,i}(k) = c_{n,k \bmod SF} d'_{p,n,i}\left(\left\lfloor \frac{k}{SF} \right\rfloor\right)$$

In Equation (11), $S''_{p,n,i}(k)$ denotes a replica calculated by the replica generation unit 257-n for each code channels based on the i-th repeated decoding result when the p-th packet is received. $d'_{p,n,i}$ is an output signal from the symbol replica generation unit 263. Also, each of the replica generation units 257-1 to 257-$N_{code}$ for each code channels is provided with a puncturing unit 261, an interleaving unit 262, a symbol replica generation unit 263, and a spreading unit 264. The puncturing unit 261, the interleaving unit 262, the symbol replica generation unit 263, and the spreading unit 264 correspond to those as illustrated in FIG. 10 according to the first embodiment.

The code multiplexing unit 253a code-multiplexes the signal replicas for code channels generated by the replica generation units 257-1 to 257-$N_{code}$ for each code channels except for one code channel. That is, the code multiplexing unit 253a generates code-multiplexed signal replica, such as signal replicas except for the first code channel, signal replicas except for the second code channel, ... , signal replicas except for the $N_{code}$-th code channel, the interference replica generation unit 256a generates the MCI replica for the respective code channel by multiplying the code multiplexed signal replica by the propagation channel estimation value. When the p-th packet is received, the interference replica generation unit 256a, that is, the replica generation unit 251a, calculates the MCI replica signal $R'_{p,n,i}(k)$ of the k-th sub-carrier for the n-th code channel based on the i-threpeated decoding result as expressed in Equation (12). $H'(k)$ is a transfer function of the propagation channel estimated value of the k-th sub-carrier.

[Equation 12]

$$R'_{n,p,i}(k) = H'(k) \sum_{u=0, u \neq n}^{N_{code}-1} S''_{u,p,i}(k)$$

Referring back to FIG. 15, the combining unit 204a combines the output data series from the signal detection units 207a-1 to 207a-P for each received signals. That is, if the reception unit 202 receives the p-th packet signal, the combining unit 204a removes the interference component from the first to p-th packet signals, and combines signals which are propagation channel compensated signals before the decoding process. If it is assumed that the output for the n-th code channel from the signal detection unit 207a-p for each received signals (specifically, the propagation channel compensation unit 215a of the signal detection unit 207a-p for each received signals) with respect to the output signal Rp(k) from the FFT unit 214 is $G_{p,n}(k)$ (where, k is an index of a sub-carrier), the output signal $\lambda_{p,n}$ for the n-th code channel of the combining unit 204a when the p-th packet signal is received is expressed in Equation (13).

[Equation 13]

$$\lambda_{p,n} = \sum_{u=1}^{p} G_{u,n}(k) = \sum_{u=1}^{p} H'(k) R''_{u,n,i}(k)$$

Also, the combining unit 204a performs the combining process whenever the signal detection units 207a-1 to 207a-p for each received signals iteratively perform the interference removing process and output the interference-removed signals.

Although it is described that the interference replica generation unit 256a is configured to remove the MCI as an example, it is possible to remove the respective interference components by generating the interference replicas such as the ICI (Inter-Carrier Interference), ISI (Inter-Symbol Interference), and the like. The de-spreading unit 216a performs a de-spreading by multiplying the spreading code of the code channel corresponding to the output signal of the combining unit 204a. The demodulation unit 217, the de-interleaving unit 218, and the de-puncturing unit 219 perform the same operations as those of the demodulation unit 217, the de-interleaving unit 218, and the de-puncturing unit 219 as illustrated in FIG. 7 according to the first embodiment. The decoding unit 205a performs the same operation, with respect to the output signal of the de-puncturing unit 219, as the decoding unit 205 as illustrated in FIG. 7 according to the first embodiment.

In this embodiment, since the received signal is a code-multiplexed signal, the signal detection units 207a-1 to 207a-P for each received signals, the combining unit 204a, the de-spreading unit 216a, the demodulation unit 217, the de-interleaving unit 218, the de-puncturing unit 219, and the decoding unit 205a perform their operations with respect to the respective code channels of the received signal. In this case, the de-spreading unit 216a, the demodulation unit 217, the de-interleaving unit 218, and the de-puncturing unit 219 perform their operations based on the control information from the received packet management unit 206a in the case where the control information the transmission parameters for the operation of the respective units, such as the spreading code, modulation scheme, interleaving pattern, de-puncturing pattern, and the like, are included in the control information.

As described above, even in the case where the packet reception device 200a is configured to combine the signal before demodulation with respect to the initially transmission packet signals and the retransmission packet signals in the communication system adopting the HARQ, the interference removing process is iteratively performed with respect to the packet signal data received before the retransmission packet when the retransmission packet signal is received, and thus the interference removing process can be performed using the interference replica having a good accuracy to improve the data decoding accuracy for the respective packets. As a result, it is possible to reduce the number of repetitions of the interference removing process and the number of repeats of the HARQ.

[Third Embodiment]

In a communication system according to the third embodiment of the present invention, a transmission packet is spatially multiplexed using MIMO (Multi Input Multi Output). In this embodiment, the communication system includes a packet transmission device (first communication device) 500 and a packet reception device (second communication device) 600. The packet reception device 600 removes other stream signal by a repeated successive interference canceller (SIC), and in the case of receiving the retransmission packet signal, removes other stream signal even with respect to the packet signal data received before the retransmission packet by the repeated successive interference canceller. Here, "stream" indicates a signal sequence transmitted from respective transmission antennas. That is, a signal transmitted from the same transmission antenna is the same stream signal, and a signal transmitted from another transmission antenna is another stream signal. Also, in this embodiment, the case where an OFDM (Orthogonal Frequency Division Multiplexing) scheme is adopted as the packet transmission scheme will be described.

Here, "interference" means another multiplexed signal. For example, in the case where a signal $P_1$ and a signal $P_2$ are spatially multiplexed, the signal $P_2$ becomes the interference against the signal $P_1$, and the signal $P_1$ becomes the interference against the signal $P_2$. An interference cancelling process is a process for removing a signal reproducing the interference signal (replica) from the received signal, and for example, in the case of detecting the signal $P_2$, a signal obtained by removing the replica of the signal $P_1$ from the received signal is used.

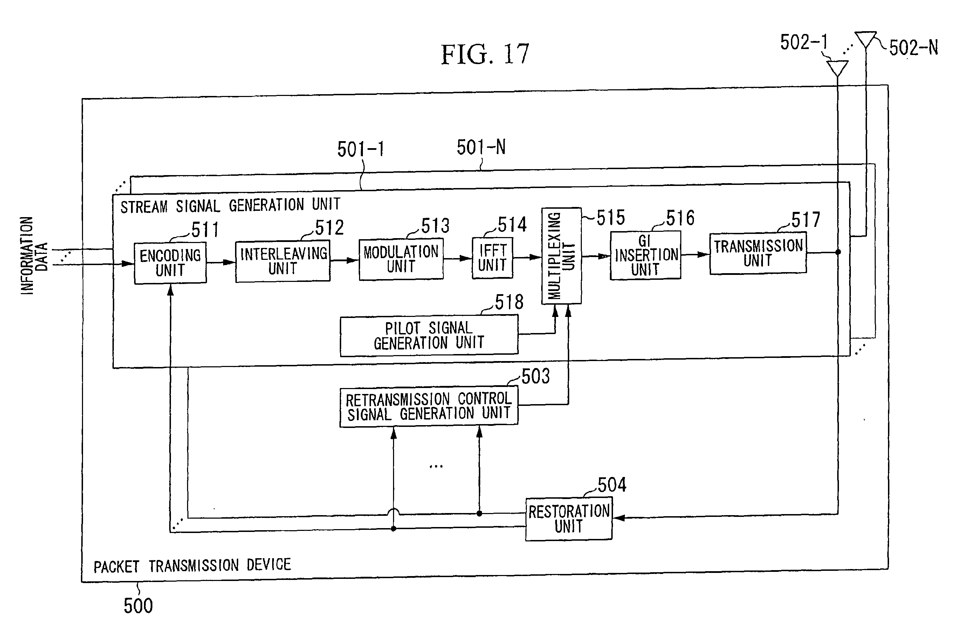

FIG. 17 is a schematic block diagram illustrating the configuration of a packet transmission device 500 according to this embodiment of the present invention. For example, the packet transmission device 500 is provided in a base station device in a downlink and in a mobile station device in an uplink by a wireless communication system. Also, the packet transmission device 500 is provided in a repeater station device in a downlink between the repeater station device and the mobile station device. The packet transmission device 500 includes stream signal generation units 501-1 to 501-N (where, N is the number of streams), antenna units 502-1 to 502-N, a retransmission control signal generation unit 503, and a restoration unit 504. The packet transmission device 500 simultaneously transmits N stream signals which are generated from different information data through N antenna units 502-1 to 502-N. Also, the packet transmission device 500 restores signals including a response signal from the packet reception device 600.

The restoration unit 504 converts the signal received from the packet reception device 600 through the antenna 502-1 into a restorable frequency band, performs a filtering process for pass-band restriction, and then performs an analog-to-digital (A/D) conversion from an analog signal into a digital signal. Further, the restoration unit 504 performs a received signal restoring process such as data demodulation, error correction decoding, and the like, of the digital signal obtained as a result of A/D conversion, extracts a response signal included in the signal from the packet reception device 600, and notifies the encoding unit 511 and the retransmission control signal generation unit 503 of information on whether the packet reception has succeeded. At this time, the restoration unit 504 has a received signal restoring function based on the transmission scheme of the signal transmitted by the packet reception device 600. Here, although it is described that the restoration unit 504 is connected to the antenna unit 502-1 and data is received through the antenna unit 502-1, the data may be received through any data unit.

The stream signal generation unit 501 generates a transmission data signal for each stream from the information data input from the outside (for example, a MAC (Media Access Control) layer). The stream signal generation unit 501 includes an encoding unit 511, an interleaving unit 512, a modulation unit 513, an IFFT unit 514, a pilot signal generation unit 518, a multiplexing unit 515, a GI insertion unit 516, and a transmission unit 517. The encoding unit 511 adds a redundancy bit to the bit series of the information data input from the outside so that error detection and error correction are possible in the packet reception device 600. Also, the encoding unit 511, in the same manner as in the first and second embodiments, includes an error detection coding unit 125, an error correction coding unit 126 or 136, a puncturing unit 127 or 137, and a transmission data storage unit 128 or 138 as illustrated in FIGS. 2 or 6.

The encoding unit 511 outputs encoded bits of initially transmission packet data or retransmission packet data according to a response signal from the packet reception device 600 with respect to a data signal (packet) for each stream output from the stream signal generation units 501-1 to 501-N. At this time, in this embodiment, packets are generated for each stream, and an error correction coding is performed for each packet (stream). The puncturing pattern of the puncturing process that is performed by the encoding unit 511, for example, may be the puncturing pattern as illustrated in FIG. 5 in the same manner as in the first and second embodiments.

The interleaving unit 512 aligns the bit arrangement of the output data series of the encoding unit 511. The modulation unit 513 generates a modulation symbol by performing a data modulation such as QPSK, 16QAM, or the like with respect to the output data from the interleaving unit 512. At this time, the data modulation scheme may differ for each stream. The IFFT unit 514 generates a time-domain signal by performing a frequency-time transform with respect to the modulation symbol from the modulation unit 513 by the IFFT (Inverse Fast Fourier Transform). The multiplexing unit 515 multiplexes the output signal from the IFFT unit 514, the pilot signal output from the pilot symbol generation unit 518 and the retransmission control signal output from the retransmission control signal generation unit 503. The pilot signal generation unit 518 generates the pilot signal used for the propagation channel estimation of the respective stream signals. Preferably, an orthogonal pilot signal is generated for each stream.

The retransmission control signal generation unit 503 generates a signal (repetition control signal) for notifying the packet reception device 600 of the number of repetitions of the respective stream signals according to the information on whether to succeed from the restoration unit 504. In FIG. 17, it is described that the retransmission control signal is multiplexed into streams in the stream signal generation unit 501-1. However, the multiplexing is not limited thereto, and a stream (or streams) on either side may be multiplexed. In this case, the retransmission control signal may include transmission parameters such as data modulation scheme used by the modulation unit 513, an encoding rate of the encoding unit 511.

The GI insertion unit 516 inserts the GI (Guard Interval) into the output signal of the multiplexing unit 514. The transmission unit 517 digital-analog (D/A) converts an output signal of the GI insertion unit 516 into an analog signal, performs a filtering process that performs a band restriction, and performs a conversion into a transmittable frequency band. The same process is performed with respect to the respective stream signal generation units 501-1 to 501-N, and the output signals from the respective stream signal generation units 501-1 to 501-N are transmitted to other antenna units 502-1 to 502-N, so that the initially transmission packets or retransmission packets transmitted from the packet transmission device 500 are spatially multiplexed. At this time, the signals output from the respective antenna units 501-1 to 501-N are called stream 1 to stream N. In this embodiment, it is described that the same stream is transmitted from the same antenna. However, the streams may be transmitted through different antennas according to the number of repeats. Hereinafter, in the packet transmission device 500, the case where the same stream is retransmitted from the same antenna will be described.

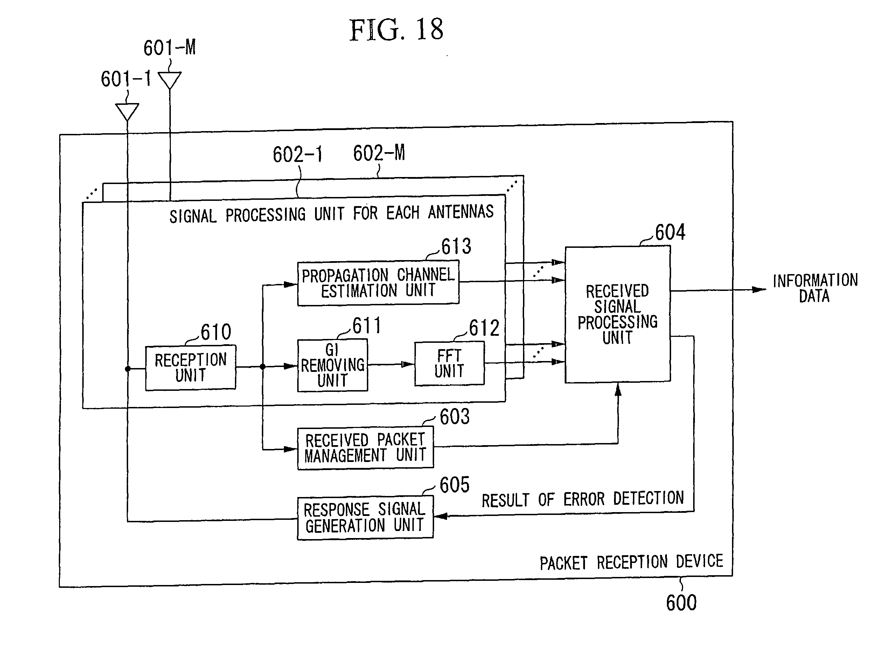

FIG. 18 is a schematic block diagram illustrating the configuration of a packet reception device 600 according to this embodiment. The packet reception device 600 of FIG. 18 includes antenna units 601-1 to 601-M (where, M is the number of antennas), reception processing units 602-1 to 602-M for each antennas, a received packet management unit 603, a received signal processing unit 604, and a response signal generation unit 605. The reception processing units 602-1 to 602-M for each antennas perform reception processing of the signals received through the corresponding antennas 601-1 to 601-M. Each of the reception processing units 602-1 to 602-M for each antennas includes a reception unit 610, a GI removing unit 611, an FFT unit 612, and a propagation channel estimation unit 613. Here, on behalf of the reception processing units 602-1 to 602-M for each antennas, the reception processing unit 602-1 for each antennas will be described.

The reception unit 610 converts a signal received from the packet transmission device 500 through the antenna unit 601-1 into a frequency band in which a signal process such as a signal detection can be performed, performs a filtering process that performs a band restriction, and performs an analog-to-digital conversion with respect to the filtered signal. The propagation channel estimation unit 613 calculates the propagation channel estimation value by estimating the propagation channel characteristic between the respective antenna units 501-1 to 501-N of the packet transmission device 500 and the antenna unit 601-1 of the packet reception device 600 using the pilot signal included in the digital received signal output from the reception unit 610. At this time, the propagation channel estimation unit 613 may calculate the propagation estimation value using other signals capable of estimating the propagation channel such as a control channel, a preamble, and the like. The GI removing unit 611 removes the GI (Guard Interval) from the data signal included in the digital received signal. The FFT unit 612 transforms the output signal of the GI removing unit 611 into a frequency-domain signal by performing the FFT transform with respect to the output signal of the GI removing unit 611. The reception processing units 602-2 to 602-M for each antennas perform the same process as that of the reception processing unit 602-1.

Here, in the MIMO system where the number of transmission antennas and the number of reception antennas are N×M, the signal Rp(k) in the k-th sub-carrier of the p-th received packet in the HARQ can be expressed by Equation (14). Here, $H_p(k)$ is a propagation channel characteristic between the transmission antenna and the reception antenna, $S_p(k)$ is a transmission signal for each transmission antenna, N(k) is a noise for each reception antenna, and T is a transpose matrix.

[Equation 14]

$$\mathbf{R}_p(k) = \mathbf{H}_p(k)\mathbf{S}_p(k) + \mathbf{N}(k)$$

$$\mathbf{R}_p(k) = \begin{bmatrix} R_1(k) & \cdots & R_M(k) \end{bmatrix}^T$$

$$\mathbf{H}_p(k) = \begin{pmatrix} H_{p,11}(k) & \cdots & H_{p,1N}(k) \\ \vdots & \ddots & \vdots \\ H_{p,M1}(k) & \cdots & H_{p,MN}(k) \end{pmatrix}$$

$$\mathbf{S}_p(k) = \begin{bmatrix} S_{p,1}(k) & \cdots & S_{p,N}(k) \end{bmatrix}^T$$

$$\mathbf{N}(k) = \begin{bmatrix} N_1(k) & \cdots & N_M(k) \end{bmatrix}^T$$

The received packet management unit 603 acquires data regarding transmission parameters, such as the number of repetitions of the respective streams transmitted from the antenna units 501-1 to 501-N of the packet transmission device 500, data modulation scheme, and the like, from the retransmission control signal included in the received signal, and notifies the received signal processing unit 604 of the acquired data. The received signal processing unit 604 detects the bit series of the information data transmitted from the antenna units 501-1 to 501-N of the packet transmission device 500 using the propagation channel estimation value output from the propagation channel estimation unit 613, the data relating to the transmission parameter of each packets output from the received packet management unit 603 and the data signal output from the reception processing unit 602-1 to 602-M for each antennas, and output the bit series of the information data and the result of error detection. The details of the operation of the received signal processing unit 604 will be described later.

The response signal generation unit 605 generates a response signal based on the error detection result output from the received signal processing unit 604, and transmits the response signal through the antenna unit 601-1, so that whether the repeat is necessary is reported to the packet transmission device 500 of the transmitter. That is, the response signal generation unit 605 generates a NACK signal indicating that the repetition is necessary when an error exists as the result of error detection, while it generates an ACK signal indicating that the repletion is not necessary when no error exits as the result of error detection. In this case, it is described that the response signal generation unit 605 transmits the generated response signal through the antenna unit 601-1. However, the response signal may be transmitted through any antenna.

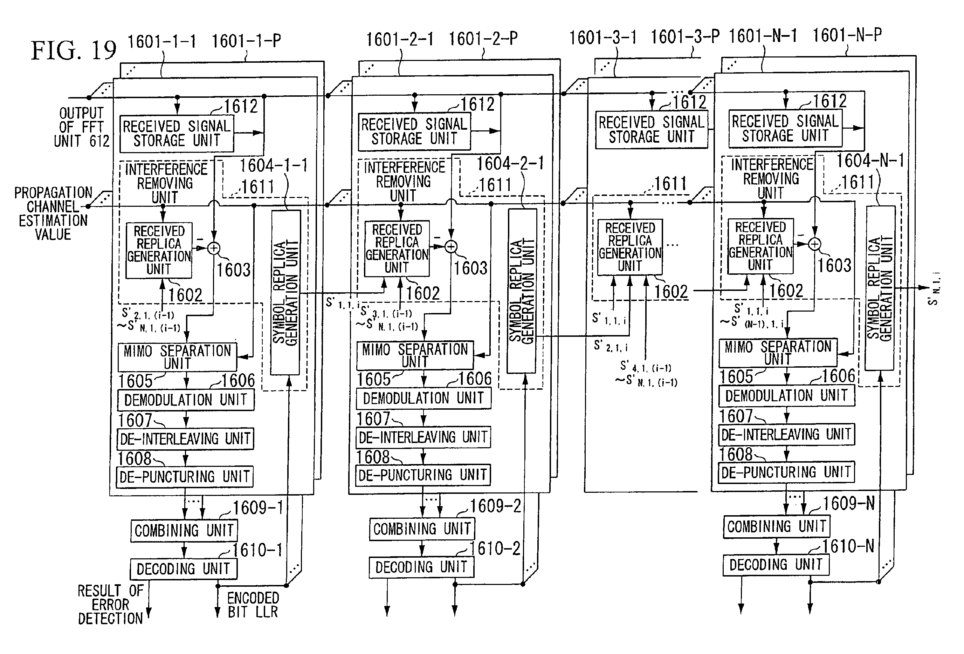

FIG. 19 is a schematic block diagram illustrating the configuration that performs the stream separation of MIMO using a repetitive SIC (Successive Interference Canceller) as the received signal processing unit 604. The received signal processing unit 604 includes a signal detection unit 1601 composed of signal detection units 1601-1-1 to 1601-N-P for each received signals, combining units 1609-1 to 1609-N, and decoding units 1610-1 to 1610-N. Here, N is the number of streams, P is the sum of the maximum number of repeats of the retransmission packets by the repeat request and the initially received packet signal (initially transmission packet number) of the repeat request signal, which is "1".

If signals for the p-th received packet in the HARQ are output from the respective FFTs 612 of the signal processing units 602-1 to 602-M for each antennas, the signal detection units 1601-1-p to 1601-N-p for each received signals perform the interference removing process with respect to the p-th received packet. Simultaneously with this, the signal detection units 1601-1-u to 1601-N-u for each received signals perform the interference removing process with respect to the u-th ($1 \leq u \leq p-1$) received packet signal already received.

For example, in the case where the FFT 612 outputs a signal for the p-th received packet and the signal detection units 1601-1-p to 1601-N-p for each received signals perform the i-th interference removing process with respect to the p-th received packet signal, the signal detection units 1601-1-u to 1601-N-u for each received signals perform the i'-th ($1 \leq i' \leq i$) interference removing process with respect to the u-th ($1 \leq u \leq p-1$) received packet signal already received.

The combining unit 1609-N combines the signal of the retransmission packet in the HARQ for the same stream signal output from the signal detection units 1601-N-1 to 1601-N-P for each received signals. That is, when the p-th packet of the N-th stream is received, the combining unit 1609-N combines the output data from the signal detection units 1601-N-1 to 1601-N-p.

Specifically, when the FFT 612 outputs the signal for the p-th received packet and the signal detection units 1601-1-u to 1601-N-p for each received signals output data of which the i-th interference removing process has been performed with respect to the p-th packet signal, the data output of which the i-th interference removing process has been performed with respect to the p-th packet signal, and the data output of which the i'-th ($1 \leq i' \leq i$) interference removing process has been performed with respect to the u-th ($1 \leq u \leq p-1$) received packet signal that the signal detection units 1601-1-u to 1601-N-u for each received signals have already received when the reception unit 202 receives the p-th packet signal, are combined. The number of repetitions i' may be set to a fixed value ($i' > 1$). This combining, if $i' = i$, is performed by an operation as expressed in Equation (2) according to the first embodiment. Hereinafter, the case where $i' = i$ will be described.

The decoding units 1610-1 to 1610-N perform the decoding process with respect to the signal output from the combining units 1609-1 to 1609-N, and calculate the LLR of the encoded bits of the information data and the result of error detection. The decoding units 1610-1 to 1610-N have the same configuration as that of the decoding unit 205 as shown in FIG. 8 according to the first embodiment. Each of the signal processing units 1601-N-1 to 1601-N-P includes a interference removing unit 1611, a MIMO separation unit 1605, a demodulation unit 1606, a de-interleaving unit 1607, a de-puncturing unit 1608, and a received signal storage unit 1612.

In the signal detection units 1601-N-1 to 1601-N-P for each received signals, the order of detecting the respective stream signals transmitted from the antenna units 501-1 to 501-N, for example, may be the order of level of a received power of a pilot signal of the respective stream or SINR (Signal to Interference plus Noise Ratio). In this embodiment, it is described that the separation of the stream signals is performed in the order of their power. In the following description, explanation will be made on the assumption that the received powers $Po_1$ to $Po_N$ of the pilot signals of the streams transmitted from the antenna units 501-1 to 501-N are $Po_1 > Po_1 > ... > Po_N$.

The received signal storage unit 1612, if there are inputs from the FFT unit 612 to the signal processing units 1601-N-1 to 1601-N-P for each received signals belonging thereto, stores the input signals from the FFT unit 612, and if there are inputs from the FFT unit 612 to the reception processing units 1601-N-1 to 1601-N-P for each received signals, outputs the signal input and stored in the FFT unit 612 to the interference removing unit 1611. For example, the received signal storage unit 1612 provided in the signal detection unit 1601-N-1 for each received signals, when the reception unit 610 receives the first packet signal (initially transmission packet signal) in the HARQ of the N-th stream, stores the output signal from the FFT unit 612 of the first packet signal. Further, if the reception unit 610 receives the packet signal after the second packet of the N-th stream, the received signal storage unit 1612 provided in the signal detection unit 1601-N-1 for each received signals inputs the output signal from the reception unit 610 of the stored first packet signal to the interference removing unit 1611 provided in the signal detection unit 1601-N-1 for each received signals.

The interference removing unit 1611 includes a subtraction unit 1603, a received replica generation unit 1602, and a symbol replica generation unit 1604 (the received replica generation unit 1602 and the symbol replica generation unit 1604 are called a replica generation unit in combination). The interference removing unit 1611 removes the replica of the interference signal from the output signal of the FFT unit 612 or the output signal of the received signal storage unit 1612. Specifically, if a packet signal, which is detected by the signal processing unit for each received signal to which the corresponding interference removing unit 1611 belongs, is input from the FFT unit 612, the interference removing unit 1611 removes the interference replica from the signal from the FFT unit 612, while if a packet signal, which is detected by the signal processing unit for each received signals to which the corresponding interference removing unit 1611 does not belong, is input from the FFT unit, the interference removing unit 1611 removes the interference replica from the signal stored in the received signal storage unit 1612.

For example, if the third packet is received in the HARQ, the interference removing unit 1611 that belongs to the signal processing units 1601-1-1 to 1601-N-2 for each received signals removes the interference replica from the first to second packet signals stored in the respective received signal storage units 1612, and the interference removing unit 1611 that belongs to the signal processing units 1601-1-3 to 1601-N-3 for each received signals removes the interference replica from the third packet signal output from the FFT unit 612.

The subtraction unit 1603 removes the interference replica by subtracting the interference replica generated by the received replica generation unit 1602 from the output signal from the FFT unit 612 or the signal stored in the received signal storage unit 1612. Specifically, if the packet signal detected by the signal processing unit for each received signals to which the subtraction unit 1603 belongs is input from the FFT unit 612, the subtraction unit 1603 subtracts the interference replica from the signal from the FFT unit 612, while if the packet signal detected by the signal processing unit for each received signals to which the subtraction unit 1603 does not belong is input from the FFT unit 612, the subtraction unit 1603 subtracts the replica of the interference signal from the signal stored in the received signal storage unit 1612 to which the subtraction unit 1603 belongs.

The output signal $R''_{n,p,i}(k)$ of the subtraction unit 1603 of the signal processing unit 1601-n-p for each received signals in the i-th iteration processing is expressed as in Equation (15). Here, $R_p(k)$ is a signal of the p-th received packet. $R'_{n,p,i}(k)$ is a symbol replica of a stream n in the i-th iteration process of the p-th received packet. k is a sub-carrier index. The subtraction unit 1603 performs the processing as expressed in Equation (15) with respect to the entire received signals of the antennas 601-1 to 601-M.

[Equation 15]

$$R''_{n,p,i}(k) = R_p(k) - R'_{n,p,i}(k)$$

The received replica generation unit 1602 generates a replica of the interference signal using the modulated symbol replica generated by the symbol replica generation unit 1604 of the signal processing unit for each received signals and the propagation channel estimation value. For example, in the case of performing the signal detection of the stream n (n=1, 2, ..., N), the received replica generation unit 1602 generates the received signal replicas of the stream 1 to stream (n-1) and stream (n+1) to stream N. Specifically, when the p-th packet signal of the HARQ is received, the received replica generation unit 1602 that belongs to the signal processing units 1601-n-1 to 1601-n-p (where, n is a stream index, n=1, 2, ..., N) for each received signals in the repeat successive interference canceller SIC, in the i-th iteration processing, generates a symbol replica of stream 1 to stream (n-1) generated in the i-th iteration process, a symbol replica of stream (n+1) to stream N generated in the (i-1)-th iteration process, and the received signal replica using the propagation channel estimation value. The output signal $R'_{n,p,i}(k)$ of the received replica generation unit 1602 of the signal processing unit 1601-n-p for each received signals in the i-th iteration processing is expressed as in Equation (16). The received replica generation unit 1602 performs the processing as expressed in Equation (16) with respect to the entire received signals of the antennas 601-1 to 601-M.

[Equation 16]

$$R'_{n,p,i}(k) = \left( \sum_{u=1}^{n-1} H_{u,p}(k) S'_{u,p,i}(k) + \sum_{u=n+1}^{N} H_{u,p}(k) S'_{u,p,i-1}(k) \right)$$

Here, $H_{u,p}(k)$ is a propagation channel estimation value of the stream u of the p-th received packet, and $S'_{u,p,i}(k)$ is a symbol replica generated in the i-th iteration process for the stream u of the p-th received packet.
At this time, in the case of i=1 (first process), the received signal replica is generated from the symbol replica of stream 1 to stream (n-1) already generated in the i-th iteration process and the propagation channel estimation value.

The symbol replica generation units 1604-1 to 1604-N-P generates a symbol replica of each stream using the LLR of the encoded bits output from the decoding units 1610-1 to 1610-P. In the i-th signal detection process of repetitive SIC, the stream signal output from the symbol replica generation unit that belongs to the signal processing units 1601-n-1 to 1601-n-q (n=1, 2, ..., N) is generated by making the replica of the modulation symbol from the LLR of the encoded bits output from the decoding unit 1610-n in the i-th signal detection process equal to that of the symbol replica generation unit 263 as illustrated in FIG. 10 according to the first embodiment. The interference removing unit 1611 performs the interference cancelling process by performs the above-described process with respect to signals from all reception antennas.

The MIMO separation unit 1605 performs a stream separation with respect to the output signal from the subtraction unit 1603. Examples of the separation schemes include separation by linear processing such as ZF (Zero Forcing) criterion, MMSE (Minimum Mean Square Error) criterion, and the like, and separation by non-linear processing such as ML (Maximum Likelihood) criterion, and the like. For example, in the case of a linear processing, the MIMO separation is performed by multiplying the output of the subtraction unit 1603 by a weight coefficient based on the ZF, MMSE, and the like. For example, the weight coefficients $W_{ZF,n,p}(k)$ and $W_{MMSE,n,p}(k)$ based on the ZF criterion and MMSE criterion of the MIMO separation unit 1605 that belongs to the signal processing unit 1601-n-p for each received signals can be expressed as in Equations (17) and (18). Here, the superscript H is a complex transposed conjugate of a matrix. the superscript -1 is an inverse matrix. $\sigma^2$ is a noise power. IN is a unit matrix of $N \times N$. Also, $H_{p,n}(k)$ in the case of a first process (i=1) in the repetitive SIC is expressed in Equation (19), and $H_{p,n}(k)$ in the case of an iteration process (i>1) is expressed in Equation (20).

[Equation 17]

$$\mathbf{W}_{ZF,n,p,1}(k) = \mathbf{H}_{p,n}{}^{H}(k)\left(\mathbf{H}_{p,n}(k)\mathbf{H}_{p,n}{}^{H}(k)\right)^{-1} \quad \text{or} \quad \left(\mathbf{H}_{p,n}{}^{H}(k)\mathbf{H}_{p,n}(k)\right)^{-1}\mathbf{H}_{p,n}{}^{H}(k)$$

[Equation 18]

$$\mathbf{W}_{MMSE,n,p,1}(k) = \mathbf{H}_{p,n}{}^{H}(k)(\mathbf{H}_{p,n}(k)\mathbf{H}_{p,n}{}^{H}(k) + \sigma^2\mathbf{I}_M)^{-1} \quad \text{or} \quad (\mathbf{H}_{p,n}{}^{H}(k)\mathbf{H}_{p,n}(k) + \sigma^2\mathbf{I}_N)^{-1}\mathbf{H}_{p,n}{}^{H}(k)$$

[Equation 19]

$$\mathbf{H}_{p,n}(k) = \begin{pmatrix} H_{p,1n}(k) & \cdots & H_{p,1N}(k) \\ \vdots & \ddots & \vdots \\ H_{p,Mn}(k) & \cdots & H_{p,MN}(k) \end{pmatrix}$$

[Equation 20]

$$\mathbf{H}_{p,n}(k) = \begin{pmatrix} H_{p,1n}(k) \\ \vdots \\ H_{p,Mn}(k) \end{pmatrix}$$

Also, since the received signal symbol replica is a replica generated by the result of soft-decision (LLR of encoded bits), as being performed in the MIMO separation in the related art, $\sigma^2$ in Equations (17) and (18) may be set as a value composed of a noise power and an error (for example, an error between the received signal and received signal symbol replica). In the same manner, Equations (19) and (20) may be set in consideration of the error between the received signal and the received signal symbol replica. For example, in the iteration process, $H_{p,n}(k)$ is constantly considered as a matrix of $N \times M$, and the propagation channel estimation values $H_{p,1n}(k)$ to $H_{p,Mn}(k)$ are allocated to elements of components in the n-th column of this matrix, and the error component between the received signal and the received signal symbol replica is allocated to other elements except for the above-mentioned component.

The demodulation unit 1606, in the same manner as the demodulation unit 217 as illustrated in FIG. 7 according to the first embodiment, calculates the result of soft-decision, such as the LLR of the encoded bits, by performing a demodulation process such as QPSK, 16QAM, or the like, with respect to the output signal from the MIMO separation unit 1605. The de-interleaving unit 1607 aligns the arrangement of the output data series from the demodulation unit 1606 so that the alignment forms an inverse manipulation of the interleaving that is performed by the packet transmission device 500 of the transmitter. The de-puncturing unit 1608, in the same manner as the de-puncturing unit 219 as illustrated in FIG. 7 according to the first embodiment, performs a de-puncturing process with respect to the output data series of the de-interleaving unit 1607 to compensate the punctured bits in the puncturing process performed by the packet transmission device 500 of the transmitter.

As described above, in a communication system that performs the packet communication using the HARQ that combines the ARQ and an error correction encoding such as a turbo encoding, if a packet, which is spatially multiplexed using the MIMO, is received, a stream separation process for the received retransmission packet and a stream process for the packet received before the received retransmission packet are performed, and then a combining of the received packet and the decoding process are performed.

Accordingly, in the streaming separation process for the packet received before the received retransmission packet, an interference replica having better accuracy than that of the stream separation process of the previously received packet can be used, and thus the data decoding accuracy for the retransmission packet can be improved. As a result, it is possible to reduce the number of repetitions of the interference removing process, combining, and decoding and the number of repetitions of the HARQ.

In the first to third embodiments of the invention, it is described that the communication system transmits and receives packets by wireless communication. However, a communication system that transmits and receives packets by wired communication can also be adopted.

Also, a program for implementing function of the reception unit 202, propagation channel estimation unit 210, interference removing unit 212, GI removing unit 213, FFT unit 214, propagation channel compensation unit 215, de-spreading unit 216, demodulation unit 217, de-interleaving unit 218, de-puncturing unit 219, combining unit 204, decoding unit 205, received packet management unit 206, and response signal generation unit 220 as illustrated in FIG. 7, the reception unit 202, GI removing unit 213a, FFT unit 214, propagation channel estimation unit 210a, interference removing unit 212a, propagation channel compensation unit 215a, combining unit 204a, de-spreading unit 216a, demodulation unit 217, de-interleaving unit 218, de-puncturing unit 219, and decoding unit 205a as illustrated in FIG. 15, and the reception unit 610, GI removing unit 611, FFT unit 612, propagation channel estimation unit 613, received packet management unit 603, received signal processing unit 604, and received signal processing unit 602-1 in FIG. 18 may be recorded in a computer readable recording medium, and a computer system may read and execute the program to perform the processing of the respective units. Here, the computer system may include an OS, and hardware such as peripheral devices.

The "computer readable recording medium" is a portable medium such as a flexible disc, magneto-optical disc, ROM and CD-ROM, and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be one for implementing part of the above functions, or the above functions may be implemented in combination with a program already recorded on the computer system.

The embodiments of the present invention have hitherto been described with reference to the drawings, but the present invention is not limited to the specific configurations of the embodiments. However, the appended claims are intended to cover modifications without departing from the scope of the present invention.

Industrial Applicability

The present invention is appropriately used in a mobile communication system, but is not limited thereto.

**Claims**

1. A communication device comprising:

   a reception unit which receives signals including an initial transmission signal and signals including retransmission signals for the same data;
   a signal detection unit which detects at least two signals among the initial transmission signal and the plurality of retransmission signals for the same data from the received signal using the result of a decoding process;

a combining unit which combines at least two signals detected by the signal detection unit; and

a decoding unit which obtains the result of the decoding process by decoding the combined signal;

wherein the detection by the signal detection unit, the combining by the combining unit, and the decoding by the decoding unit are iteratively performed with respect to the plurality of signals for the same data.

2. The communication device according to claim 1, wherein the at least two signals detected by the signal detection unit include the initial transmission signal.

3. The communication device according to claim 1, wherein the signal detection unit detects all the initial transmission signal and the retransmission signals for the same data received by a reception unit; and

the combining unit combines all the signals for the same data detected by the signal detection unit.

4. The communication device according to claim 1, wherein the signal detection unit generates an interference replica of the initial transmission signal and interference replicas of the retransmission signals based on the result of the decoding process, and subtracts the interference replicas from the signal received by the reception unit.

5. The communication device according to claim 4, wherein the decoding processing unit outputs the result of a soft-decision decoding process; and

the signal detection unit generates the interference replica using the result of the soft-decision decoding process.

6. The communication device according to claim 4, wherein the interference replica is an interference replica of one interference component of inter-symbol interference , inter-carrier interference, inter-code interference, and inter-stream interference with respect to the initial transmission signal or the retransmission signals.

7. The communication device according to claim 4, wherein the signal detection unit outputs the result of soft-decision by demodulating a signal obtained by subtracting the interference replica from the signal received by the reception unit; and

the combining unit combines the result of soft-decision.

8. The communication device according to claim 4, wherein the signal received by the reception unit is a spatial multiplexing signal; and

the signal detection unit includes a MIMO separation unit which performs a separation process of a stream which constitutes the signal received by the reception unit.

9. A communication system including a first communication device and a second communication device, the first communication device transmitting an initial transmission signal for data, and if a repeat request signal is received from a communication device of the other party as a response to the initial transmission signal, transmitting a retransmission signal for the data, and the second communication device receiving the signal transmitted from the first communication device, and if an error is detected from the result of decoding the signal, requesting the repeat from the first communication device, wherein the second communication device comprising:

a reception unit which receives signals including the initial transmission signal and signals including the retransmission signals for the same data;

a signal detection unit which detects at least two signals among the initial transmission signal and the plurality of retransmission signals for the same data from the received signal using the result of a decoding process;

a combining unit which combines at least two signals detected by the signal detection unit; and

a decoding unit which obtains the result of the decoding process by decoding the combined signal;

wherein the detection by the signal detection unit, the combining by the combining unit, and the decoding by the decoding unit are iteratively performed with respect to the plurality of signals for the same data.

10. A reception method in a communication device, the reception method comprising:

receiving, by the communication device, signals including an initial transmission signal and signals including retransmission signals for the same data;

detecting, by the communication device, at least two signals among the initial transmission signal and the plurality of retransmission signals for the same data from the received signal using the result of a decoding process;

combining, by the communication device, at least two signals detected in the detecting; and

obtaining, by the communication device, the result of the decoding process by decoding the signal combined in the combining;

wherein the detection, the combining, and the obtaining are iteratively performed with respect to the plurality of signals for the same data.

11. A program causing a computer provided in a communication device to execute function as:

a reception unit which receives signals including an initial transmission signal and signals including retransmission signals for the same data;

a signal detection unit which detects at least two signals among the initial transmission signal and the plurality of retransmission signals for the same data from the received signal using the result of a decoding process;

a combining unit which combines at least two signals detected by the signal detection unit; and

a decoding unit which obtains the result of the decoding process by decoding the combined signal;

wherein the detection by the signal detection unit, the combining by the combining unit, and the decoding by the decoding unit are iteratively performed with respect to the plurality of signals for the same data.

FIG. 1

EP 2 247 018 A1

# FIG. 2

## FIG. 3

126

FROM ERROR
DETECTION CODING
UNIT 125

SYSTEMATIC BIT x

TO TRANSMISSION DATA
STORAGE UNIT 128
TO PUNCTURING UNIT 127

3001
INTERNAL
CODER

PARITY BIT z

3003
INTERNAL
INTERLEAVER

3002
INTERNAL
CODER

PARITY BIT z'

EP 2 247 018 A1

# FIG. 4

FRAME

$T_f$

RETRANSMISSION CONTROL SIGNAL

PACKET 4

PACKET 3

PACKET 2

PACKET 1

CODE CHANNEL

PILOT SIGNAL

OFDM SYMBOL

$T_s$

t

EP 2 247 018 A1

# FIG. 5

| | R=1/2 | R=3/4 |
|---|---|---|
| PATTERN 1 | $\begin{pmatrix} x \\ z \\ z' \end{pmatrix} = \begin{pmatrix} 11 \\ 10 \\ 01 \end{pmatrix}$ | $\begin{pmatrix} x \\ z \\ z' \end{pmatrix} = \begin{pmatrix} 111111 \\ 100000 \\ 000100 \end{pmatrix}$ |
| PATTERN 2 | $\begin{pmatrix} x \\ z \\ z' \end{pmatrix} = \begin{pmatrix} 11 \\ 01 \\ 10 \end{pmatrix}$ | $\begin{pmatrix} x \\ z \\ z' \end{pmatrix} = \begin{pmatrix} 000000 \\ 011110 \\ 110011 \end{pmatrix}$ |

# FIG. 6

# FIG. 7

PACKET RECEPTION DEVICE ~200

## FIG. 8

205

```
DECODING UNIT
                        241
   ┌─────────────┐
   │    ERROR    │
→  │ CORRECTION  │ ────────→ ENCODED BIT LLR
   │DECODING UNIT│
   └──────┬──────┘
          │
          ▼         242
   ┌─────────────┐
   │    ERROR    │
   │  DETECTION  │
   │    UNIT     │
   └──────┬──────┘
          │
          ▼
```

ERROR DETECTION INFORMATION

## FIG. 9

PROPAGATION CHANNEL
ESTIMATION VALUE

ENCODED BIT LLR
$\lambda'_p$

```
                         │                        │
                         ▼         251            │
                  ┌─────────────┐                 │
                  │   REPLICA   │                 │
                  │ GENERATION  │ ◄───────────────┘
                  │    UNIT     │
                  └──────┬──────┘
                         │
                         ▼         252
OUTPUT OF RECEPTION UNIT 202  ┌─────────────┐
          RECEIVED SIGNAL ──→ │ SUBTRACTION │ ──────→
OUTPUT OF STORAGE UNIT 212    │    UNIT     │
                              └─────────────┘
   INTERFERENCE
   REMOVING UNIT
```

212

FIG. 10

# FIG. 11

```
            START

                              S10
        RECEIVE q-th PACKET

                              S11
     STORE DATA OF RECEIVED PACKET

                              S12
       SIGNAL DETECTION FOR FIRST
         TO q-th RECEIVED PACKET

                              S13
          COMBINE DATA OF FIRST
         TO q-th RECEIVED PACKET

                              S14
         ERROR CORRECTION
         DECODING PROCESS

                              S15
      NO        ERROR
            DETECTED?

                YES
                              S16
            PREDETERMINED
         NUMBER OF REPETITIONS    NO
             PERFORMED?

                YES
       S18                         S17
    TRANSMIT ACK          TRANSMIT NACK


            END
```

# FIG. 12

START

S100

HOW MANY TIMES PACKET RECEIVED?

p>q → END

p≦q

S101

ACQUIRE p-th RECEIVED PACKET BY STORAGE UNIT

S102

HOW MANY TIMES PROCESS REPEATED?

i>1

S104

ACQUIRE ENCODED LLR FROM DECODING UNIT

S105

GENERATE INTERFERENCE REPLICA SIGNAL

i=1
(FIRST PROCESSING)

S103

GENERATE INTERFERENCE REPLICA SIGNAL "0"

S106

REMOVE INTERFERENCE REPLICA SIGNAL

S107

GI REMOVAL

S108

FFT

S109

MMSE PROCESS

S110

DE-SPREADING, DECODING PROCESS

S111

DE-INTERLEAVING PROCESS

S112

DE-PUNCTURING PROCESS

END

# FIG. 13

PACKET TRANSMISSION DEVICE    PACKET RECEPTION DEVICE
100                              200

TRANSMIT INITIAL PACKET OF
INFORMATION DATA A1          — Sa1 →    RECEIVE INITIAL PACKET
(FIRST PACKET TRANSMISSION)

RECEIVED SIGNAL DETECTION
PROCESS USING FIRST RECEIVED
PACKET ONLY→DETECT ERROR

NACK RECEPTION    ← Sa2 —    NACK TRANSMISSION

TRANSMIT SECOND PACKET
(RETRANSMISSION PACKET)      — Sa3 →    RECEIVE SECOND PACKET
OF INFORMATION DATA A1

RECEIVED SIGNAL DETECTION
PROCESS USING FIRST AND
SECOND RECEIVED PACKETS
→DETECT ERROR

NACK RECEPTION    ← Sa4 —    NACK TRANSMISSION

TRANSMIT THIRD PACKET
(RETRANSMISSION PACKET)      — Sa5 →    RECEIVE THIRD PACKET
OF INFORMATION DATA A1

RECEIVED SIGNAL DETECTION
PROCESS USING FIRST TO THIRD
RECEIVED PACKETS
→DETECT ERROR

NACK RECEPTION    ← Sa6 —    NACK TRANSMISSION

⋮

TRANSMIT p-th PACKET
(RETRANSMISSION PACKET)      — Sa7 →    RECEIVE p-th PACKET
OF INFORMATION DATA A1

RECEIVED SIGNAL DETECTION
PROCESS USING FIRST TO p-th
PACKETS→NO ERROR

ACK RECEPTION    ← Sa8 —    ACK TRANSMISSION

TRANSMIT INITIAL PACKET
OF INFORMATION DATA A2       — Sa9 →
(FIRST PACKET TRANSMISSION)

⋮

FIG. 14

PACKET 3 (INITIAL TRANSMISSION)
PACKET 2 (INITIAL TRANSMISSION)
PACKET 1 (INITIAL TRANSMISSION)

FIRST FRAME

NACK
NACK
ACK

PACKET TRANSMISSION DEVICE 100

Sb1

Sb2

PACKET RECEPTION DEVICE 200

TIME

PACKET 3 (INITIAL TRANSMISSION) — ITERATION PROCESS → NO ERROR — NACK
PACKET 2 (INITIAL TRANSMISSION) — ITERATION PROCESS → NO ERROR — NACK
PACKET 1 (INITIAL TRANSMISSION) — ITERATION PROCESS → NO ERROR — ACK

RESPONSE SIGNAL OF FIRST FRAME

PACKET 3 (RETRANSMISSION)
PACKET 2 (RETRANSMISSION)
PACKET 4 (INITIAL TRANSMISSION)

FIRST FRAME

ACK
ACK
ACK

PACKET TRANSMISSION DEVICE 100

Sb3

Sb4

PACKET RECEPTION DEVICE 200

TIME

PACKET 3 (RETRANSMISSION) — COMBINING, ITERATION PROCESS → NO ERROR — ACK
PACKET 2 (RETRANSMISSION) — COMBINING, ITERATION PROCESS → NO ERROR — ACK
PACKET 4 (INITIAL TRANSMISSION) — ITERATION PROCESS → NO ERROR — ACK

RESPONSE SIGNAL OF SECOND FRAME

EP 2 247 018 A1

# FIG. 15

PACKET RECEPTION DEVICE

200a

FIG. 16

# FIG. 17

PACKET TRANSMISSION DEVICE (500), with STREAM SIGNAL GENERATION UNIT (501-1 ... 501-N) containing ENCODING UNIT (511), INTERLEAVING UNIT (512), MODULATION UNIT (513), IFFT UNIT (514), MULTIPLEXING UNIT (515), GI INSERTION UNIT (516), TRANSMISSION UNIT (517), PILOT SIGNAL GENERATION UNIT (518); RETRANSMISSION CONTROL SIGNAL GENERATION UNIT (503), RESTORATION UNIT (504); antennas 502-1 ... 502-N; INFORMATION DATA input.

EP 2 247 018 A1

# FIG. 18

FIG. 19

RESULT OF ERROR DETECTION

ENCODED BIT LLR

<table>
<tr><td colspan="2"><strong>INTERNATIONAL SEARCH REPORT</strong></td><td>International application No.<br>PCT/JP2009/053088</td></tr>
</table>

| A. CLASSIFICATION OF SUBJECT MATTER |
|---|
| H04L1/16(2006.01)i, H04B1/707(2006.01)i, H04J11/00(2006.01)i, H04J99/00 (2009.01)i |

According to International Patent Classification (IPC) or to both national classification and IPC

| B. FIELDS SEARCHED |
|---|
| Minimum documentation searched (classification system followed by classification symbols)<br>H04L1/16, H04B1/707, H04J11/00, H04J99/00 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2007-184926 A (NTT Docomo Inc.), 19 July, 2007 (19.07.07), Par. Nos. [0014], [0028] to [0030], [0081], [0097], [0102], [0136]; 1, 2, 9-11 & CN 1992581 A | 1-11 |
| A | Tatsunori YUI et al., "ICI Canceller o Mochiiru Turbo Fugoka MC-CDMA ni Okeru Hantei Kikan Channel Suitei", IEICE Technical Report, RCS 107 (262), The Institute of Electronics, Information and Communication Engineers, 11 October, 2007 (11.10.07), pages 7 to 12 | 1-11 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>03 April, 2009 (03.04.09) | Date of mailing of the international search report<br>19 May, 2009 (19.05.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/053088 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | Koiichi ADACHI et al., "Kurikaeshi Henkei QRD-M Shingo Bunriho o Mochiiru OFDM MIMO no HARQ Throughput Tokusei", IEICE Technical Report, RCS 107(147), The Institute of Electronics, Information and Communication Engineers, 2007. 07, pages 47 to 52 | 1-11 |
| A | Haitao Zheng, et al., Multiple ARQ Processes for MIMO Systems, EURASIP Journal on Applied Signal Processing, Volume 2004 (2004), Issue 5, 2004. 01, p.772-782 | 1-11 |

Form PCT/ISA/210 (continuation of second sheet) (April 2007)

EP 2 247 018 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008040009 A
- JP 2004221702 A
- JP 2005198223 A

### Non-patent literature cited in the description

- **Y. Zhou ; J. Wang ; M. Sawahashi.** Downlink Transmission of Broadband OFCDM Systems-Part III: Turbo-Coded. *IEEE JSAC,* vol. 24 (1), 132-140
- **T. Yoshimoto ; R. Yamada ; K, Shimezawa.** Performance of MC-CDM Systems with Inter-Code Interference Canceller and Frequency-Domain Interleaver. *Proc. IEEE VTC 2007-Spring,* 2007
- **D. Chase.** code combining-A maximum likelihood decoding approach for combining and arbitrary number of noisy packets. *IEEE Trans. Commun.,* May 1985, vol. COM-33, 385-393
- **J. Hagenauer.** Rate-compatible punctured convolutional codes (RCPC codes) and their application. *IEEE Trans. Commun.,* April 1988, vol. 36, 389-400